# EUROPÄISCHE PATENTSCHRIFT

(11) **EP 4 208 655 B1**
(45) Veröffentlichungstag und Bekanntmachung des Hinweises auf die Patenterteilung: **15.07.2026**
(21) Anmeldenummer: 21762735.5
(22) Anmeldetag: 24.08.2021
(51) Int. Cl.: F16H 3/00, F16H 3/089

(54) **GETRIEBEEINHEIT, GETRIEBEANORDNUNG UND LANDWIRTSCHAFTLICHES ZUGFAHRZEUG**
TRANSMISSION UNIT, TRANSMISSION ASSEMBLY AND AGRICULTURAL TRACTOR
TRANSMISSION, SYSTÉME DE TRANSMISSION ET VÉHICULE TRACTEUR AGRICOLE

(30) Priorität: 01.09.2020 DE 102020122827; 01.09.2020 EP 20193895
(43) Veröffentlichungstag der Anmeldung: 12.07.2023
(73) Patentinhaber: Deere & Company, Moline, IL 61265 (US)
(72) Erfinder: RAISCH, Stefan, 68163 Mannheim (DE); GUGEL, Rainer, 68163 Mannheim (DE); BUHRKE, Frank, 68163 Mannheim (DE); MUELLER, David, 68163 Mannheim (DE)
(74) Vertreter: Stein, Stefan
(86) Internationale Anmeldenummer: PCT/EP2021/073352
(87) Internationale Veröffentlichungsnummer: WO 2022/048946

(56) Entgegenhaltungen:
- EP-A1- 3 091 253
- EP-A1- 3 171 053
- WO-A1-2019/091953
- WO-A2-2008/142523
- DE-A1- 102011 076 386
- DE-A1- 102013 113 908
- DE-A1- 102015 206 160
- DE-A1- 102015 206 881
- DE-A1- 102015 224 647
- DE-A1- 102016 220 701
- DE-A1- 2 052 350
- US-A- 5 383 375
- US-A1- 2008 245 167

## Beschreibung

Die Erfindung betrifft eine Getriebeeinheit gemäss dem Oberbegriff des unabhängigen Anspruchs 1, eine Getriebeanordnung gemäss dem Oberbegriff des Anspruchs 12 und ein landwirtschaftliches Zugfahrzeug gemäss dem Oberbegriff des unabhängigen Anspruchs 16.

Seit langem kommen in landwirtschaftlichen Zugfahrzeugen Getriebeanordnungen zum Einsatz, um den Vortrieb des Zugfahrzeugs auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können. Die Getriebeanordnung kann dabei insbesondere eine unter Last schaltbare Getriebeanordnung sein. Eine bekannte Maßnahme ist es, die Anzahl Gangstufen einer Getriebeanordnung zu erhöhen, indem diese eine Kombination von Getrieben umfasst, beispielsweise durch Kombination einer Getriebeeinrichtung mit einer Getriebeeinheit. Die DE 10 2013 110 709 A1 offenbart eine solche Getriebeanordnung. Die dabei verwendeten Getriebeeinheiten wiederum können aus der WO 2009/050078 A2 oder der DE 10 2016 220701 A1 als Doppelkupplungsgetriebe bekannt sein. Aus der DE 10 2013 110 709 A1 ist weiter bekannt, dass, wenn sich die Getriebeeinheit beispielsweise in zwei verschiedene Gangstufen bzw. Übersetzungen, insbesondere Gruppengangstufen oder Übersetzungen im Gruppenbereich, schalten lässt, mit der Getriebeanordnung eine Verdoppelung der verfügbaren Übersetzungen gegenüber einer alleinigen Getriebeeinrichtung, insbesondere einem Mehrstufengetriebe, erzielt werden kann. Dies wird erreicht, indem zunächst in der niedrigen (ersten) Gruppengangstufe die ursprünglich verfügbaren Gangstufen der Getriebeeinrichtung, insbesondere die Lastschaltstufen des Mehrstufengetriebes, 1 bis n in Abfolge geschaltet werden und anschließend in der hohen (zweiten) Gruppengangstufe erneut die Gangstufen bzw. Lastschaltstufen 1 bis n in Abfolge geschaltet werden. Nachteilig an den bekannten Getriebeanordnungen ist, dass diese zu hohe Anfahrgeschwindigkeiten und zu viele Radsätze und/oder Zahnräder aufweisen. Darüber hinaus sind die Schaltzeiten der bekannten Getriebeanordnungen hoch, der benötigte Einbauraum ist zu gross und die Lebensdauer zu gering.

Ausgehend von diesem Stand der Technik ist es daher eine Aufgabe der vorliegenden Erfindung eine Getriebeeinheit, eine Getriebeanordnung und ein landwirtschaftliches Zugfahrzeug vorzuschlagen, welche die aus dem Stand der Technik bekannten Nachteile weitgehend vermeiden, insbesondere eine Getriebeeinheit, eine Getriebeanordnung und ein landwirtschaftliches Zugfahrzeug vorzuschlagen, die konstruktiv einfacher ausgestaltet sind und/oder weniger Einbauraum benötigen und/oder zusätzliche Übersetzungen im Gruppenbereich zu realisieren, insbesondere gleichzeitig mit einem reduzierten Einbauraum, und/oder wartungsfrei oder weniger wartungsaufwändig sind.

Diese Aufgabe wird durch eine Getriebeeinheit mit den Merkmalen des Anspruchs 1, eine Getriebeanordnung mit den Merkmalen des Anspruchs 12 und ein landwirtschaftliches Zugfahrzeug mit den Merkmalen des Anspruchs 16 gelöst. Die abhängigen Ansprüche beziehen sich auf besonders vorteilhafte Ausführungsformen der Erfindung.

Erfindungsgemäß wird eine Getriebeeinheit für einen Antriebsstrang eines landwirtschaftlichen Fahrzeugs vorgeschlagen, bevorzugt eine Zugmaschine, besonders bevorzugt ein Traktor oder Schlepper oder eine Baumaschine. Die Getriebeeinheit umfasst eine erste Kupplung und eine zweite Kupplung, wobei die Eingangsseite, insbesondere eine gemeinsame Eingangsseite, der ersten und zweiten Kupplung antreibbar ist. Die Getriebeeinheit umfasst weiter eine erste Eingangswelle und eine zweite Eingangswelle und eine Ausgangswelle, insbesondere genau nur eine Ausgangswelle. Die erste Kupplung ist mit der ersten Eingangswelle drehfest verbunden und die zweite Kupplung ist mit der zweiten Eingangswelle drehfest verbunden. Die Getriebeeinheit weist eine Mehrzahl von Radsätzen mit jeweils einem Schaltrad, beispielsweise einem Zahnrad, und einem Festrad, beispielsweise einem Zahnrad, zur Einrichtung von Gangstufen auf. Die Getriebeeinheit kann insbesondere mindestens zwei, genau vier oder mehrere Radsätze, zur Einrichtung von Gangstufen, insbesondere Gruppengangstufen aufweisen. Ausserdem weist mindestens ein zweiter Radsatz, insbesondere nur genau ein zweiter Radsatz, jeweils das Festrad an der ersten Eingangswelle und jeweils das Schaltrad an der Ausgangswelle auf. Ausserdem weist mindestens ein dritter Radsatz, insbesondere nur genau ein dritter Radsatz, das Festrad an der zweiten Eingangswelle und jeweils das Schaltrad an der Ausgangswelle auf. Darüber hinaus umfasst die Getriebeeinheit ein Schaltelement zum Koppeln zweier Schalträder, wobei insbesondere das Schaltelement drehbar auf der Ausgangswelle gelagert ist. Das Schaltrad des zweiten Radsatzes und das Schaltrad des dritten Radsatzes sind dabei mit dem Schaltelement derart koppelbar, bevorzugt derart selektiv koppelbar, dass über den zweiten und dritten Radsatz wenigstens eine Windungsgangstufe ausbildbar ist. Das Schaltrad des zweiten Radsatzes und das Schaltrad des dritten Radsatzes können dabei insbesondere in Verbindung mit dem ersten oder vierten Radsatz koppelbar sein. Das kann insbesondere dadurch realisiert werden, wenn auch der erste oder vierte Radsatz durch ein Koppelelement, beispielsweise ein erstes, zweites, drittes oder viertes Koppelelement, an der ersten und/oder zweiten Eingangswelle und/oder der Ausgangswelle festgestellt sind. Die erste und zweite Eingangswelle sind als Hohlwellen ausgebildet.

Mit anderen Worten, das Schaltrad des zweiten Radsatzes und das Schaltrad des dritten Radsatzes und das Schaltelement können derart auf der Ausgangswelle angeordnet sein, und insbesondere mittels des Schaltelements das Schaltrad des zweiten Radsatzes und das Schaltrad des dritten Radsatzes derart verbindbar und lösbar sein, dass zumindest eine Windungsgangstufe über das Schaltelement schaltbar ist. Der Leistungsfluss der Windungsgangstufe kann sich dabei über mindestens drei Radsätze mit miteinander kämmenden Festrädern und Schalträdern winden. Die Getriebeeinheit kann bevorzugt genau vier Radsätze zur Einrichtung von Gangstufen aufweisen.

Die erste und/oder zweite Kupplung können als lastschaltbare Kupplungen, bevorzugt als Lamellenkupplungen oder als trockene Einscheibenkupplungen, besonders bevorzugt als Reibkupplungen ausgebildet sein. Die erste und/oder zweite Kupplung können aber auch als nicht-lastschaltbare Kupplungen ausgebildet sein. Die erste und/oder zweite Kupplung und die erste und/oder zweiten Getriebeeingangswellen können achsparallel und/oder koaxial zueinander angeordnet sein.

Abtriebsseitig kann der Getriebeeinheit die Ausgangswelle zugeordnet sein. Die Getriebeeinheit kann eingangsseitig, also als Eingangsseite, bevorzugt als gemeinsame Eingangsseite, eine Kupplungsantriebswelle umfassen. Die Eingangsseite kann aber auch eine erste und zweite Kupplungsantriebswelle umfassen. Die Kupplungsantriebswelle kann als eine Hohlwelle ausgebildet sein. Die erste Kupplung ist zwischen einem geöffneten Zustand, in dem die Kupplungsantriebswelle von der ersten Eingangswelle antriebsmäßig gelöst ist, und einem geschlossenen Zustand beweglich und/oder schaltbar, in dem die Kupplungsantriebswelle mit der ersten Eingangswelle in Antriebsverbindung steht. Die zweite Kupplung kann ebenfalls zwischen einem geöffneten Zustand, in dem die Kupplungsantriebswelle von der zweiten Eingangswelle antriebsmäßig gelöst ist, und einem geschlossenen Zustand beweglich und/oder schaltbar, in dem die Kupplungsantriebswelle mit der zweiten Eingangswelle in Antriebsverbindung steht.

Die erste und/oder zweite Eingangswelle können mit der Ausgangswelle in Antriebsverbindung gebracht werden. Ausserdem können die erste und/oder zweite Eingangswelle zueinander koaxial und/oder ineinander, insbesondere frei drehbar ineinander, angeordnet sein. Die Getriebeeinheit kann eine oder mehrere Luftdruckabdichtungen umfassen, die in die Ausgangswelle und/oder die erste und/oder zweite Eingangswelle integriert sein können.

Die Getriebeeinheit umfasst ausserdem das Schaltelement, insbesondere genau ein Schaltelement, zum Koppeln der Schalträder des zweiten und dritten Radsatzes. Das Schaltelement kann dazu an der Ausgangswelle zwischen dem zweiten und dritten Radsatz angeordnet sein, und insbesondere auf der Ausgangswelle drehbar gelagert sein. Die zwei Schalträder können mit dem Schaltelement drehfest und lösbar verbindbar sein, wobei die zwei gekoppelten Schalträder insbesondere auf der Ausgangswelle drehbar und/oder lose angeordnet sein können. Dabei können die zwei drehbar gelagerten Schalträder des zweiten und dritten Radsatzes über das Schaltelement derart koppelbar sein, dass in Abhängigkeit von einem Schaltzustand des Schaltelements zwischen den zwei Schalträdern eine drehfeste Verbindung herstellbar ist, sodass die beiden Schalträder mit der gleichen Drehzahl drehbar sind. Mit anderen Worten, die zwei Schalträder können mit dem Schaltelement derart verbunden werden, dass die erste und zweite Eingangswelle in Abhängigkeit gebracht werden. Im Speziellen werden also bei einer Windungsgangstufe das Schaltrad des zweiten Radsatzes und das Schaltrad des dritten Radsatzes miteinander gekoppelt, um dadurch einen gemeinsamen Kraft- und Leistungsfluss durch die erste und zweite Eingangswelle zu realisieren.

Im Speziellen kann die Getriebeeinheit genau zwei Eingangswellen, die erste und zweite Eingangswelle, genau eine Ausgangswelle sowie genau zwei Kupplungen umfassen. Ausserdem kann die Getriebeeinheit genau vier Radsätze umfassen.

Falls eine Windungsgangstufe geschaltet wird, können das zweite und dritte Schaltrad durch das Schaltelement drehfest miteinander verbunden sein und gleichzeitig der erste oder vierte Radsatz aktiviert sein. Im Speziellen kann also, wenn das zweite und dritte Schaltrad durch das Schaltelement drehfest miteinander verbunden sind, gleichzeitig das erste Schaltrad durch das erste Koppelelement mit der Ausgangswelle verbunden werden oder das erste Schaltrad durch das dritte Koppelelement mit der ersten Eingangswelle verbunden werden oder das vierte Schaltrad durch das zweite Koppelelement mit der Ausgangswelle verbunden werden oder das vierte Schaltrad durch das vierte Koppelelement mit der zweiten Eingangswelle verbunden werden.

Im Speziellen können nur auf der Ausgangswelle Schalträder drehbar gelagert sein und auf der ersten und zweiten Eingangswelle nur Festräder drehfest angeordnet sein, die insbesondere zumindest teilweise oder alle mit den Schalträdern in Eingriff stehen können. Besonders bevorzugt können mindestens ein erster Radsatz, insbesondere nur genau ein erster Radsatz, und mindestens der zweite Radsatz, insbesondere nur genau ein zweiter Radsatz, jeweils das Festrad an der ersten Eingangswelle und jeweils das Schaltrad an der Ausgangswelle aufweisen. Ausserdem können mindestens ein dritter Radsatz, insbesondere nur genau ein dritter Radsatz, und ein mindestens vierter Radsatz, insbesondere nur genau ein vierter Radsatz, jeweils das Festrad an der zweiten Eingangswelle und jeweils das Schaltrad an der Ausgangswelle aufweisen. Im Speziellen kann der erste Radsatz ein erstes Festrad auf der ersten Eingangswelle umfassen, das mit einem ersten Schaltrad der Ausgangswelle kämmt. Der zweite Radsatz kann ein zweites Festrad der ersten Eingangswelle umfassen, das mit einem zweiten Schaltrad, der Ausgangswelle in Eingriff stehen kann. Der dritte Radsatz kann ein drittes Festrad der zweiten Eingangswelle umfassen, das mit einem dritten Schaltrad der Ausgangswelle kämmen kann. Der vierte Radsatz kann ein viertes Festrad der zweiten Eingangswelle umfassen, das mit dem Schaltrad, insbesondere einem vierten Schaltrad, der Ausgangswelle in Eingriff stehen kann. Falls dann eine Windungsgangstufe geschaltet wird, können zweite und dritte Schaltrad durch das Schaltelement drehfest miteinander verbunden sein und gleichzeitig das erste Schaltrad durch ein erstes Koppelelement oder das vierte Schaltrad durch ein zweites Koppelelement mit der Ausgangswelle verbunden werden.

Die Getriebeeinheit kann also im Speziellen sechs Gangstufen oder Gruppengangstufen umfassen, die insbesondere lastschaltbar sind. Die Getriebeeinheit kann also vier Gangstufen aufweisen, die nur über einen der vier Radsätze schaltbar sind und zwei Gangstufen, die als Windungsgangstufen schaltbar sind. Dazu können das zweite und dritte Schaltrad derart koppelbar sein, dass, insbesondere wenn auch der erste oder vierte Radsatz durch ein Koppelelement an der ersten oder zweiten Eingangswelle oder der Ausgangswelle festgestellt sind, zwei weitere Gangstufen als Windungsgangstufen realisiert sein können. Bevorzugt können die erste und die sechste Gangstufe ein Windungsgang sein, also als Windungsgangstufe realisiert sein. Die Schrittgrössen zwischen den einzelnen Gangstufen A bis F können konstant sein und/oder in einem Bereich von 1,2 bis 2,4, bevorzugt in einem Bereich von 1,46 bis 2,14 liegen, besonders bevorzugt 1,77 sein.

Wesentlich für die Erfindung ist, dass vorteilhafterweise mit der erfindungsgemässen Getriebeeinheit Windungsgangstufen realisiert werden und aufgrund der Mehrfachnutzungen einzelner Radsätze Bauteileinsparungen beim konstruktiven Aufbau der Getriebeeinheit möglich sind. Da es sich bei der Getriebeeinheit insbesondere um ein Doppelkupplungsgetriebe mit zwei Windungsgangstufen handelt, das in unterschiedliche Übersetzungen schaltbar ist, bevorzugt sechs Gangstufen schaltbar ist, kann also vorteilhafterweise eine maximale Anzahl an Gangstufen mit einer minimalen Anzahl an Wellen und Zahnrädern in der Getriebeeinheit realisiert werden. Dadurch kann von Vorteil ein minimaler Einbauraum bzw. Bauraum im landwirtschaftlichen Zugfahrzeug und ein optimal konstruktiv einfacher Aufbau der Getriebeeinheit erreicht werden. Vorteilhaft ermöglicht die Getriebeeinheit auch ein Schalten unter Last. Es können ausserdem im Vergleich zu Getriebeeinheiten mit einer vergleichbaren Anzahl an Wellen und Zahnrädern zusätzliche Übersetzungen realisiert werden, sodass mit der erfindungsgemässen Getriebeeinheit eine verbesserte Getriebespreizung und mehr Gangstufen erreicht werden. Ausserdem werden höhere Fahrgeschwindigkeiten und geringe Anfahrgeschwindigkeiten ermöglicht, wodurch mit dem Zugfahrzeug Arbeiten mit langsamen Geschwindigkeiten umgesetzt werden können. Die konstruktiv einfache Art und Weise, in welcher die Getriebeeinheit ausgebildet ist, ermöglicht es zusätzliche Zahnradstufen einzusparen, wodurch wiederum Gewicht und somit Kraftstoffkosten gespart werden. Ausserdem ermöglicht der geringere Einbauraum, dass das Zugfahrzeug aufgrund des kürzeren Radabstands wendiger und kompakter wird und/oder der eingesparte Einbauraum für andere Funktionen/Baugruppen verwendet werden kann. Ein letzter wesentlicher Vorteil sind die kürzeren Radsätze, wodurch kürzere Wellen verwendet werden können. Kürzere Wellen wiederum sorgen für weniger Wellendurchbiegung und somit für eine längere Lager- und Verzahnungslebensdauer.

In Ausgestaltung der Erfindung ist das Schaltelement zwischen einer ersten Schaltstellung, in der das Schaltrad des zweiten Radsatzes und das Schaltrad des dritten Radsatzes gekoppelt sind, und einer zweiten Schaltstellung beweglich, in der das Schaltrad des zweiten Radsatzes und das Schaltrad des dritten Radsatzes voneinander gelöst sind. Dadurch werden die oben genannten Vorteile erreicht.

In Ausgestaltung der Erfindung sind auf der ersten und zweiten Eingangswelle und auf der Ausgangswelle Schalträder drehbar gelagert sind und/oder Festräder sind drehfest angeordnet. Ausserdem weist mindestens ein erster Radsatz das Schaltrad, insbesondere das erste Schaltrad, an der ersten Eingangswelle und das Festrad, insbesondere das erste Festrad, an der Ausgangswelle auf und/oder ein vierter Radsatz weist das Schaltrad, insbesondere das vierte Schaltrad, an der zweiten Eingangswelle und das Festrad, insbesondere das vierte Festrad, an der Ausgangswelle auf. Diese Anordnung kann in Kombination oder jeweils einzeln vorgesehen sein. Ausserdem kann zusätzlich ein zweiter Radsatz das Festrad an der ersten Eingangswelle und das Schaltrad an der Ausgangswelle aufweisen und ein dritter Radsatz das Festrad an der zweiten Eingangswelle und jeweils das Schaltrad an der Ausgangswelle aufweisen. Somit können die folgenden vier Ausführungsbeispiele ausgebildet werden. Entweder können auf der Ausgangswelle vier Schalträder angeordnet sein oder drei Schalträder, bevorzugt also das zweite, dritte und vierte Schaltrad oder das erste, zweite und dritte Schaltrad angeordnet sein, auf der Ausgangswelle angeordnet sein oder es können auf der Ausgangswelle nur zwei Schalträder, bevorzugt also das zweite, dritte Schaltrad angeordnet sein. Es können also der der erste Radsatz ein erstes Festrad auf der ersten Eingangswelle umfassen, das mit einem ersten Schaltrad der Ausgangswelle kämmt. Ebenso kann der erste Radsatz ein erstes Schaltrad auf der ersten Eingangswelle umfassen, das mit einem ersten Festrad auf der Ausgangswelle kämmt. Der zweite Radsatz kann ein zweites Festrad der ersten Eingangswelle umfassen, das mit einem zweiten Schaltrad auf der Ausgangswelle in Eingriff stehen kann. Der dritte Radsatz kann ein drittes Festrad der zweiten Eingangswelle umfassen, das mit einem dritten Schaltrad der Ausgangswelle kämmen kann. Der vierte Radsatz kann ein viertes Festrad der zweiten Eingangswelle umfassen, das mit einem vierten Schaltrad auf der Ausgangswelle in Eingriff stehen kann. Der vierte Radsatz kann aber auch ein viertes Schaltrad auf der zweiten Eingangswelle umfassen, das mit dem vierten Festrad auf der Ausgangswelle in Eingriff stehen kann. Die vier unterschiedlichen Ausführungsbeispiele entstehen also aufgrund der Anordnung von keinem Schaltrad auf der ersten und zweiten Eingangswelle oder einem Schaltrad auf der ersten oder zweiten Eingangswelle, entweder das erste oder das vierte Schaltrad, oder jeweils einem Schaltrad auf der ersten und zweiten Eingangswelle, also dem ersten und vierten Schaltrad. Dabei stehe jeweils die Festräder und Schalträder eines Radsatzes in Eingriff miteinander. Alles vier Ausführungsbeispiele weisen die oben genannten Vorteile der Getriebeeinheit auf.

In einem konstruktiv vorteilhaften Ausführungsbeispiel umfasst die Getriebeeinheit eines oder mehrere Koppelelemente, insbesondere genau zwei, drei oder vier Koppelelemente, wobei das Schaltrad mit einem der Koppelelemente mit der ersten und/oder zweiten Eingangswelle und/oder mit der Ausgangswelle drehfest und lösbar verbindbar ist, insbesondere jeweils eines der Schalträder mit einem der Koppelelemente mit der ersten und/oder zweiten Eingangswelle und/oder der Ausgangswelle drehfest und lösbar verbindbar ist.

Das oder die Koppelelemente können drehfest und axial verschiebbar auf der ersten und/oder zweiten Eingangswelle und/oder der Ausgangswelle gelagert und/oder mittels eines Stellelements bewegbar sein, insbesondere axial bewegbar. Die Koppelelemente können zwischen jeweils zwei Schalträdern angeordnet sein oder jeweils nur einem Schaltrad zugeordnet sein. Die Koppelelemente können in an sich bekannter Form als Klauenkupplungen oder als Stellvorrichtungen, insbesondere Schiebemuffen, und Synchronringe umfassende Schaltpakete bzw. Synchronisierungen ausgebildet sein. In jedem Fall handelt es sich bei den Koppelelementen um drehfest und axial verschieblich auf der ersten und/oder zweiten Eingangswelle und/oder der Ausgangswelle angeordnete Koppelmittel, mit denen die Schalträder zur Zuschaltung einer Übersetzung drehfest mit der ersten und/oder zweiten Eingangswelle und/oder der Ausgangswelle verbindbar sind. Die Axialverschiebung der Koppelelemente kann über das Stellelement erfolgen. Dazu kann die Getriebeeinheit entsprechende Stellelement umfassen oder insbesondere jedes Koppelelemente kann jeweils ein Stellelement umfassen. Die Schaltpakete bzw. Synchronisierungen können auf der ersten und/oder zweiten Eingangswelle und/oder der Ausgangswelle axial verschiebbare, aber mit der ersten und/oder zweiten Eingangswelle und/oder der Ausgangswelle drehfest verbundene Stellvorrichtungen bzw. Schiebemuffe und axial direkt benachbarte, also rechts und/oder links der Stellvorrichtung oder Schiebemuffe, angeordnete Synchronringe umfassen. Die Koppelelemente können einseitige Koppelelemente bzw. Schaltpakete sein, also axial nur in eine Richtung direkt benachbart angeordnete Synchronringe umfassen. Die Koppelelemente können aber auch zweiseitige Koppelelemente bzw. Schaltpakete sein, also axial in zwei Richtung direkt benachbart angeordnete Synchronringe umfassen. Die Stellvorrichtung, Schiebemuffe oder das Stellelement können zur Betätigung der Koppelelemente manuell oder hilfskraftunterstützt betätigbar sein. Dazu kann die Getriebeeinheit beispielsweise einen Aktuator umfassen, insbesondere eine Kolben-Zylinder-Anordnung, sodass die Stellvorrichtung oder Stellelement hilfskraftunterstützt betätigbar sind. Der Aktuator, insbesondere die Kolben-Zylinder-Anordnungen, können durch ein hydraulisches oder pneumatisches Druckmittel betreibbar sein. Bei der vorbeschriebenen Ausführungsvariante kann die jeweils angegebene Richtung, in die die Koppelelemente verschoben werden, um ein gewünschtes Schaltrad mit der ersten und/oder zweiten Eingangswelle und/oder der Ausgangswelle zu verbinden, veränderbar sein, indem die Koppelelemente z.B. durch entsprechende Umlenkelemente modifiziert werden. Die Getriebeeinheit umfasst mindestens ein erstes und ein zweites Koppelelement. Wenn alle Schalträder auf der Ausgangswelle angeordnet sind, umfasst die Getriebeeinheit insbesondere genau nur ein erstes und ein zweites Koppelelement. Das erste Koppelelement kann zwischen dem ersten und zweiten Radsatz und das zweite Koppelelement kann zwischen dem dritten und vierten Radsatz auf der Ausgangswelle angeordnet sein.

Die Getriebeeinheit kann ausserdem ein drittes und/oder viertes Koppelelement umfassen. Wenn das erste Schaltrad auf der ersten Eingangswelle angeordnet ist, kann das dritte Koppelelement zwischen dem ersten und zweiten Radsatz auf der ersten Eingangswelle angeordnet sein. Das erste Schaltrad kann mit dem dritten Koppelelement mit der ersten Eingangswelle drehfest und lösbar verbindbar sein. Wenn das vierte Schaltrad auf der zweiten Eingangswelle drehbar gelagert ist, kann das vierte Koppelelement zwischen dem dritten und vierten Radsatz auf der zweiten Eingangswelle angeordnet sein. Das vierte Schaltrad kann mit dem vierten Koppelelement mit der zweiten Eingangswelle drehfest und lösbar verbindbar sein. Wenn das erste Schaltrad auf der ersten Eingangswelle und das vierte Schaltrad auf der zweiten Eingangswelle angeordnet sind, kann das dritte Koppelelement zwischen dem ersten und zweiten Radsatz auf der ersten Eingangswelle angeordnet sein und das vierte Koppelelement zwischen dem dritten und vierten Radsatz auf der zweiten Eingangswelle angeordnet sein. Abhängig vom Schaltzustand der ersten und zweiten Kupplung sowie vom Schaltzustand des ersten, zweiten, dritten (falls vorhanden) und vierten (falls vorhanden) Koppelelements und des Schaltelements kann die Getriebeeinheit 80 mit jede der Kupplungen in jeweils zwei Gangstufen, also insgesamt vier Gangstufen und jeweils eine zusätzlich Gangstufen als Windungsgangstufe also insgesamt zwei Windungsgangstufen und somit in insgesamt sechs Gangstufen bzw. Gruppengangstufen geschaltet werden. Dabei kann die Getriebeeinheit unter Last geschalten werden. Die erste und der sechste Gangstufe sind wiederum als Windungsgang, also als Windungsgangstufe realisiert.

In einer vorteilhaften Weiterbildung der Getriebeeinheit ist das Schaltelement zwischen zwei Koppelelementen, insbesondere dem ersten und zweiten Koppelelement, auf der Ausgangswelle angeordnet. Das Schaltelement kann als Klauenkupplung oder als eine Stellvorrichtung, insbesondere eine Schiebemuffe, und einen Synchronring umfassendes Schaltpaket bzw. Synchronisierung ausgebildet sein. Das Schaltelement kann axial verschiebbar auf der Ausgangswelle gelagert und/oder mittels eines Stellelements bewegbar sein, insbesondere axial bewegbar. Das Schaltelement kann als eine Synchronisierung, insbesondere als eine einseitig wirkende Synchronisierung ausgebildet sein. Ebenso kann das Schaltelement eine auf der Ausgangswelle axial verschiebbare freidrehende Schiebemuffe, insbesondere als eine axial in eine Richtung verschiebbare freidrehende Schiebemuffe ausgebildet sein. Das Schaltelement kann ausserdem einen oder mehrere Synchronringe umfassen, die insbesondere der Schiebemuffe zugeordnet sein können. Die Synchronringe können axial auf einer oder beiden Seiten, insbesondere nur auf einer Seite der Schiebemuffe angeordnet sein, also insbesondere rechts oder links der Schiebemuffe angeordnet sein. Somit lassen sich die oben genannten Vorteile der Getriebeeinheit realisieren.

In Ausgestaltung der Erfindung sind die höchste Gangstufe und die niedrigste Gangstufe als Windungsgangstufe realisiert und/oder die höchste Gangstufe nutzt unter anderem den Radsatz der vorherigen Gangstufe und/oder die niedrigste Gangstufe nutzt unter anderem den Radsatz der nächst höheren Gangstufe. Es sind bei dieser Ausführungsvariante aber auch andere Zuordnungen der Gangstufen in Bezug auf die erste und zweite Kupplung möglich. Insbesondere kann z. B. durch eine Spiegelung eine umgekehrte Zuordnung auf einfachste Weise realisiert werden. Vorteilhafterweise ist mit der Windungsgangstufe in der niedrigsten Gangstufe die Übersetzung ein Produkt aus drei Übersetzungsstufen, wodurch eine größere Übersetzung erzielt werden kann, als nur durch eine Übersetzung durch einen Radsatz. Dadurch wird ein niedrigster Gang mit langsameren Geschwindigkeiten als ohne Windungsgangstufe ermöglicht. Von Vorteil ist weiter, dass zusätzlich in Kombination mit der Windungsgangstufe in der höchsten Gangstufe die Übersetzung ebenfalls ein Produkt aus drei Übersetzungsstufen ist und in der höchsten Gangstufe höhere Geschwindigkeiten erreicht werden können, als ohne Windungsgangstufe. Dadurch wird ein höchster Gang mit höheren Geschwindigkeiten als ohne Windungsgangstufe ermöglicht.

In einer besonders vorteilhaften Ausgestaltung ist ein Hinterachskegeltrieb mit der Ausgangswelle verbunden, insbesondere drehfest verbunden. Vorteilhafterweise können aufgrund der direkten Verbindung der Ausgangswelle mit dem Hinterachskegeltrieb teure und wartungsanfällige Verbindungselemente, beispielsweise eine Gelenkwelle, eingespart werden. Ausserdem ist die Ausgangswelle mit einer Verzahnung eines Vorderachsantriebs in Verbindung. Dazu kann ein Vorderachsantriebsrad mit der Ausgangswelle in Verbindung stehen, insbesondere mit der Ausgangswelle drehfest verbunden oder wahlweise drehfest verbindbar und lösbar sein. Das Vorderachsantriebsrad kann aber auch unabhängig von der Ausgangswelle angeordnet sein, also beispielsweise als Teil des Vorderachsantriebs ausgebildet sein. Dabei kann das Vorderachsantriebsrad mit einem Zahnrad auf der Ausgangswelle, also insbesondere einem Vorderachsrad, in Eingriff stehen. Das Vorderachsrad kann mit der Ausgangswelle verbunden sein, insbesondere drehfest verbunden oder wahlweise drehfest verbindbar oder lösbar sein. Vorteilhafterweise kann somit der Vorderachsantrieb mit dem Hinterachskegeltrieb mittels der Ausgangswelle verbunden sein kann. Ausserdem übernimmt von Vorteil die Ausgangswelle zusätzlich die Funktion der Verbindung einer vorderen und hinteren Fahrzeugachse, wodurch ein weiteres Verbindungselement eingespart werden kann. Ebenso kann die Ausgangswelle mit einem Parksperrenrads in Verbindung stehen. Das Parksperrenrad kann mit der Ausgangswelle in Verbindung stehen, insbesondere mit der Ausgangswelle drehfest verbunden oder wahlweise drehfest verbindbar und lösbar sein. Das Parksperrenrad kann aber auch unabhängig von der Ausgangswelle angeordnet sein, also beispielsweise als Teil einer Parksperre ausgebildet sein. Dabei kann das Parksperrenrad mit einem Zahnrad auf der Ausgangswelle, also insbesondere einem Parkzahnrad, in Eingriff stehen. Dabei kann das Parkzahnrad mit der Ausgangswelle verbunden sein, insbesondere drehfest verbunden oder wahlweise drehfest verbindbar oder lösbar sein. Das Parksperrenrad und das Vorderachsantriebsrad können zwei separate Zahnräder sein. Ebenso können das Parkzahnrad und das Vorderachsrad zwei separate Zahnräder sein. Dadurch kann von Vorteil eine längere Haltbarkeit und/oder Lebensdauer des Aufbaus garantiert werden. Das Parksperrenrad und das Vorderachsantriebsrad können aber auch in ein und dasselbe Zahnrad integriert sein, also als ein einzelnes Zahnrad ausgebildet sein. Ebenso können das Parkzahnrad und das Vorderachsrad in ein und dasselbe integriert Zahnrad sein, also als ein einzelnes Zahnrad ausgebildet sein. Dies reduziert den Einbauraum und das Gewicht sowie den Materialaufwand.

In Ausgestaltung der Erfindung ist das Ritzel des Hinterachskegeltriebs als Teil der Ausgangswelle ausgebildet, insbesondere in die Ausgangswelle integriert. Vorteilhafterweise kann dadurch eine sehr kompakte Bauweise erreicht, welche Einbauraum und Getriebelänge einspart.

Eine vorteilhafte Weiterbildung der Getriebeeinheit, aber insbesondere auch der Getriebeanordnung, sieht vor, dass in der ersten und zweiten Eingangswelle eine Zapfwellen-Antriebswelle (PTO-Antriebswelle) angeordnet ist. Die Zapfwellen-Antriebswelle kann als Vollwelle ausgeführt sein. Die Getriebeeinheit, insbesondere aber auch die Getriebeanordnung, kann also eine Wellendurchführung für einen Zapfwellenantrieb des landwirtschaftlichen Fahrzeugs aufweisen. Die erste und zweite Eingangswelle der Getriebeeinheit sind als Hohlwelle ausgeführt und können die Zapfwellen-Antriebswelle zum Antrieb eines Zapfwellengetriebes in sich aufnehmen. Ausserdem kann die Kupplungsantriebswelle als Hohlwelle ausgeführt sein und die Zapfwellen-Antriebswelle zum Antrieb eines Zapfwellengetriebes in sich aufnehmen. Zweckmäßigerweise können auch die erste und zweite Kupplung einen zentralen Durchgang für die Zapfwellen-Antriebswelle aufweisen. Auf diese Weise ist eine direkte und damit besonders energieeffiziente Antriebsleistungsübertragung vom Antriebsmotor zu einem Zapfwellenabtrieb des Traktors möglich.

In Ausgestaltung der Erfindung umfasst die Getriebeeinheit sechs Gangstufen, bevorzugt genau nur sechs Gangstufen, besonders bevorzugt genau nur sechs lastschaltbare Gangstufen, und/oder der erste und der sechste Gang, also der niedrigste und höchste Gang, sind als Windungsgangstufe realisiert. Hierdurch wird vorteilhafterweise eine optimale Getriebe-Abstufung erzielt, die für die komplette Bandbreite der Arbeitsbereiche von landwirtschaftlichen Zugfahrzeugen ideal ist.

Die Erfindung betrifft weiter eine Getriebeanordnung für einen Antriebsstrang eines landwirtschaftlichen Zugfahrzeugs, insbesondere für einen Traktor oder Schlepper oder eine Baumaschine, um einen Antriebsmotor mit einem Fahrantrieb des Zugfahrzeugs zu verbinden. Die Getriebeanordnung umfasst eine Getriebeeinheit, insbesondere nach einem der Ansprüche 1 bis 11, und eine Getriebeeinrichtung. Die Getriebeeinrichtung kann eine Antriebswelle umfassen und die Antriebswelle mit der Eingangsseite der ersten und zweiten Kupplungen der Getriebeeinheit antriebsverbunden sein. Der Antriebsmotor kann eine Motorabtriebswelle umfassen. Die Getriebeanordnung, insbesondere die Getriebeeinrichtung, kann eingangsseitig mit der Motorabtriebswelle verbunden sein, bevorzugt mit einer eingangsseitigen Welle der Getriebeanordnung, besonders bevorzugt mit einer eingangsseitigen Welle der Getriebeeinrichtung oder der Getriebeeinheit, sodass die Getriebeanordnung mit der Motorabtriebswelle in Antriebsverbindung stehen kann und mit der Motorabtriebswelle antreibbar ist. Die Getriebeanordnung kann somit im Kraft- und Momentenfluss, ausgehend von einem Antriebsmotor, der der Getriebeanordnung in Kraft- und Momentenfluss vorgelagert ist, die Getriebeeinrichtung und nachgelagert die Getriebeeinheit aufweisen. Die Getriebeeinrichtung kann also im Speziellen der Getriebeeinheit vorgelagert sein. Ebenso kann aber auch die Getriebeeinheit der Getriebeeinrichtung vorgelagert sein. Die erfindungsgemässe Getriebeanordnung weist die oben beschriebenen Vorteile der erfindungsgemässen Getriebeeinheit auf. Da es sich bei der Getriebeanordnung um eine Getriebeeinrichtung, bevorzugt ein Mehrstufengetriebe, mit einer nachgelagerten erfindungsgemässen Getriebeeinheit handeln kann, insbesondere um ein Doppelkupplungsgetriebe mit zwei Windungsgangstufen, kann also vorteilhafterweise eine maximale Anzahl an Gangstufen mit einer minimalen Anzahl an Wellen und Zahnrädern in der Getriebeanordnung realisiert werden. Dadurch kann von Vorteil ein minimaler Einbauraum und ein optimal konstruktiv einfacher Aufbau der Getriebeanordnung erreicht werden. Darüber hinaus erzielt die Getriebeanordnung aufgrund der insbesondere sechs nutzbaren Gangstufen (Gruppengangstufen) mit unterschiedlichem Übersetzungsverhältnis der Getriebeeinheit in Kombination mit den Gangstufen der Getriebeeinrichtung, insbesondere einer Getriebeeinrichtung mit vier Lastschaltstufen des Mehrstufengetriebes, eine optimale Getriebespreizung. Vorteilhaft ermöglichen sowohl die Getriebeeinheit als auch die Getriebeeinrichtung dabei ein Schalten unter Last, so dass die Getriebeanordnung insgesamt lastschaltfähig ist. Darüber hinaus wird durch die Kombination der Getriebeeinheit mit der vorgelagerten Getriebeeinrichtung eine optimale Getriebeabstufung für landwirtschaftliche Zugfahrzeuge erreicht, die für die komplette Bandbreite der Arbeitsbereiche von landwirtschaftlichen Zugfahrzeugen ideal ist. Optimalerweise ist eine Maximalgeschwindigkeit von 50 km/h und eine Minimalgeschwindigkeit im Bereich von ca. 2 km/h ideal für ein landwirtschaftliches Zugfahrzeug dieses Leistungssegments. Speziell im Bereich der Landmaschinen, wo geometrische Getriebeabstufungen gefordert sind, ist dies eine konstruktiv einfach ausgestaltete Getriebeanordnung und/oder ein optimales Arrangement, insbesondere bzgl. Bauraum und Schaltbarkeit. Im Gegensatz dazu werden im Automobil progressive Gangabstufungen gewünscht, deswegen ist dort eine Kombination von zwei nachgelagerten Getriebeeinheiten eher nachteilhaft, weil dadurch eine geometrische Abstufung quasi erzwungen wird.

In Ausgestaltung der Erfindung umfasst die Getriebeeinrichtung ein Stufengetriebe, insbesondere ein Einstufengetriebe oder ein Mehrstufengetriebe, oder ein stufenloses Getriebe. Bevorzugt ist das Mehrstufengetriebe in eine Mehrzahl von Lastschaltstufen schaltbar, insbesondere volllastschaltbar ist und/oder das Mehrstufengetriebe umfasst einen Planetenradsatz mit einer oder mehreren Planetenstufen, bevorzugt einen Planetenradsatz mit drei integrierten Planetenstufen, und eine den Planetenstufen zugeordnete Kupplungsanordnung. Die Kupplungsanordnung kann insbesondere einen zusätzlichen Direktgang umfassen. Ausserdem kann die Kupplungsanordnung eine oder mehrere Kupplungseinheiten umfassen, die als Kupplungen, bevorzugt als Bremsen ausgebildet sein können. Dabei kann unter der Bremse eine Kupplung verstanden werden, deren eine Eingangs- oder Ausgangsseite feststehend ist, also beispielsweise mit einem Gehäuse verbunden ist. Der Planetenradsatz kann ein von der Motorabtriebswelle angetriebenes Hohlrad aufweisen, insbesondere eine Welle aufweisen, die mit der Motorabtriebswelle verbunden sein kann und mit der Motorabtriebswelle in Antriebsverbindung stehen kann und mit dieser antreibbar ist. Der Planetenradsatz kann ausserdem einen Planetenradträger umfassen, der für jede Planetenstufe eines oder mehrere Planetenräder, insbesondere pro Planetenstufe zwei, drei oder vier Planetenräder umfasst, die insbesondere drehfest mit dem Planetenradträger verbunden sein können. Jede Planetenstufe kann ausserdem jeweils ein Sonnenrad umfassen, dass jeweils mit einer Welle, insbesondere einer Hohlwelle, verbunden ist, insbesondere drehfest verbunden ist. Die jeweilige Welle kann mit jeweils einer Kupplungseinheit verbunden sein. Dabei können die einer Planetenstufe zugeordneten Planetenräder an dem jeweils zugeordneten Sonnenrad abrollen. Darüber hinaus kann die Kupplungsanordnung einen zusätzlichen Direktgang umfassen, insbesondere können zwei Kupplungseinheiten mittels einer Direktkupplung koppelbar sein. Im Speziellen umfasst das Mehrstufengetriebe den Planetenradsatz mit drei integrierten Planetenstufen. Die erste Planetenstufe kann ein erstes Sonnenrad umfassen, dass mit einer ersten Planetenwelle verbunden ist, insbesondere drehfest verbunden sein kann. Die erste Planentenwelle wiederum kann mit der ersten Kupplungseinheit verbunden sein. Die zweite Planetenstufe kann ein zweites Sonnenrad umfassen, dass mit einer zweiten Planetenwelle verbunden sein kann, insbesondere drehfest verbunden sein kann. Die zweite Planentenwelle wiederum kann mit der zweite Kupplungseinheit verbunden sein. Die dritte Planetenstufe kann ein drittes Sonnenrad umfassen, dass mit einer dritten Planetenwelle verbunden, insbesondere drehfest verbunden sein kann. Die dritte Planentenwelle wiederum kann mit der dritte Kupplungseinheit verbunden sein. Die erste, zweite und dritte Kupplungseinheit können bevorzugt als Bremsen ausgebildet sein. Dabei ist die jeweilige Eingangsseite der jeweiligen Kupplungseinheit mit dem jeweiligen Sonnenrad und der jeweilige Planetenwelle verbunden und die Ausgangsseite der jeweiligen Kupplungseinheit mit einem Gehäuse, insbesondere dem Getriebegehäuse verbunden.

Darüber hinaus können die zweite und dritte Kupplungseinheiten koppelbar sein. Die erste, zweite und dritte Kupplungseinheit können als eine Lamellenkupplung, insbesondere als eine Reibkupplung ausgeführte sein. Im Speziellen umfasst das Mehrstufengetriebe vier Gänge. Das Mehrstufengetriebe kann durch selektives Betätigen der Kupplungsanordnung in zumindest zwei Lastschaltstufen, bevorzugt in genau nur vier Lastschaltstufen schaltbar sein. Die Getriebeanordnung kann im Allgemeinen die Getriebeeinheit umfassen, die in eine Anzahl von Gangstufen schaltbar ist, insbesondere sechs Gruppengangstufen schaltbar ist, und die Getriebeeinrichtung umfassen, die in weitere Gangstufen schaltbar ist, bevorzugt vier Lastschaltstufen, so dass zwischen einem Ausgang und einem Eingang der Getriebeanordnung abhängig von einer gewählten Lastschaltstufe und einer gewählten Gruppenschaltstufe eine Anzahl von Übersetzungen einstellbar ist, insbesondere 4 mal 6 Übersetzungen, insbesondere Gänge, einstellbar sind. Vorteilhafterweise weist die Getriebeanordnung, insbesondere das Mehrstufengetriebe, die oben genannten Vorteile der Getriebeanordnung auf. Die Getriebeanordnung zeichnet sich dadurch aus, dass mit der Getriebeanordnung derartige Übersetzungen herstellbar sind, dass zum Einstellen einer nächsttieferen oder einer nächsthöheren Übersetzung der Getriebeanordnung höchstens zwei der Kupplungen und/oder Kupplungseinheiten zu betätigen sind. Darüber hinaus können die Gangstufen der Getriebeeinheit in Bezug auf die Lastschaltstufen der Getriebeeinrichtung so abgestimmt werden, dass bei einem Gruppenwechsel, d.h. einem Schaltvorgang, bei dem zur Erzielung einer nächstniedrigeren (oder nächsthöheren) Übersetzung der Getriebeanordnung gleichzeitig eine Gangstufe der Getriebeeinheit und eine Lastschaltstufe zu wechseln ist, ein Wechsel zumindest zwischen zwei extremen (höchste und niedrigste) Lastschaltstufen der Getriebeeinrichtung vermieden wird, da ein Wechsel zwischen den extremen Lastschaltstufen einen besonders hohen Schaltaufwand erfordert. Dies lässt sich vorteilhaft dadurch realisieren, da es sich bei der Getriebeanordnung um eine Kombination aus einer erfindungsgemässen Getriebeeinheit mit einem Stufengetriebe, insbesondere einem Mehrstufengetriebe handelt.

Die Getriebeanordnung kann eine Wellendurchführung für einen Zapfwellenantrieb des landwirtschaftlichen Fahrzeugs aufweisen.

Dazu sind die erste und zweite Eingangswelle der Getriebeeinheit als Hohlwelle ausgeführt und können die Zapfwellen-Antriebswelle zum Antrieb eines Zapfwellengetriebes in sich aufnehmen. Ausserdem können die Wellen der Getriebeeinrichtung und/oder die Antriebswelle der Getriebeeinrichtung und/oder die Kupplungsantriebswelle als Hohlwelle ausgeführt sein und die Zapfwellen-Antriebswelle zum Antrieb eines Zapfwellengetriebes in sich aufnehmen. Zweckmäßigerweise können auch die Planetenradsätze der Getriebeeinrichtung und/oder die erste und zweite Kupplung einen zentralen Durchgang für die Zapfwellen-Antriebswelle aufweisen. Bei der Gestaltung der Getriebeanordnung spielt auch die Anpassbarkeit an eine vorgegebene Einbauumgebung eine Rolle. Demnach kann die Getriebeanordnung vorteilhafterweise weiterhin ein zumindest die Getriebeeinheit aufnehmendes Getriebegehäuse aufweisen, in dem die Zapfwellen-Antriebswelle zum Antrieb des Zapfwellengetriebes anordenbar ist. Die Zapfwellen-Antriebswelle kann insbesondere koaxial zur ersten und zweiten Eingangswelle der Getriebeeinheit anordenbar sein. Vorteilhaft umfasst die Getriebeanordnung, insbesondere die Getriebeeinrichtung, eine Lastschaltwendeeinheit, insbesondere einen Power Reverser (Reversiereinrichtung), zur Umkehr der Fahrtrichtung, insbesondere eine lastschaltbare oder nicht-lastschaltbare Lastschaltwendeeinheit, und/oder die Lastschaltwendeeinheit ist der Getriebeeinheit vorgelagert, insbesondere einem Stufengetriebe, insbesondere Mehrstufengetriebe, der Getriebeeinrichtung vorgelagert oder nachgelagert. Die Lastschaltwendeeinheit kann eine durch eine Kupplungsanordnung betätigbare Lastschaltwendeeinheit sein. Mit der Lastschaltwendeeinheit kann sich eine Drehrichtung des Abtriebs der Getriebeanordnung, insbesondere der Ausgangswelle umkehrbar sein. Die Lastschaltwendeeinheit kann einem Stufengetriebe der Getriebeeinrichtung nachgelagert sein, sodass die Kupplungsantriebswelle mit einer ausgangsseitigen Welle, insbesondere Hohlwelle, der Lastschaltwendeeinheit verbunden, insbesondere drehfest verbunden ist und/oder mit der Lastschaltwendeeinheit antreibbar ist. Eingangsseitig kann die Lastschaltwendeeinheit dann mit einer Welle, insbesondere Hohlwelle, des Planetenradträgers in Antriebsverbindung stehen und*oder antreibbar sein. Die Lastschaltwendeeinheit kann aber auch dem Stufengetriebe vorgelagert sein, sodass in dieser Ausführung die Lastschaltwendeeinheit mit der Motorabtriebswelle, insbesondere Hohlwelle, verbunden sein kann, insbesondere in Antriebsverbindung stehen kann und/oder mit der Motorabtriebswelle antreibbar ist. Die Lastschaltwendeeinheit kann dann eine Welle, insbesondere eine Hohlwelle umfassen, die mit der Getriebeanordnung, bevorzugt der Eingangsseite der Getriebeeinrichtung, insbesondere mit dem Hohlrad, verbunden ist, sodass diese antreibbar ist. Im Speziellen kann die Lastschaltwendeeinheit in Planetenbauweise ausgeführt sein, insbesondere als eine Planetenstufe mit Bremse ausgeführt sein. Darüber hinaus kann die Lastschaltwendeeinheit koaxial zu einer Eingangswelle der Getriebeanordnung sein. Im Speziellen kann die Lastschaltwendeeinheit ausgangsseitig des Mehrstufengetriebes angeordnet sein. Durch die Planetenbauweise wird eine besonders kurze axiale Baulänge erzielt, was sich vorteilhaft auch auf die Baulänge der Schaltgetriebeanordnung insgesamt auswirkt.

Die Erfindung betrifft weiter ein landwirtschaftliches Zugfahrzeug, bevorzugt ein Traktor, Schlepper oder eine Baumaschine, mit einer Getriebeeinheit nach einem der Ansprüche 1 bis 11 oder einer Getriebeanordnung nach einem der Ansprüche 12 bis 15. Das landwirtschaftliche Zugfahrzeug kann ausserdem einen Antriebsmotor umfassen. Dabei kann die Getriebeanordnung vom Antriebsmotor antreibbar sein und mit zumindest einer Fahrzeugachse des Zugfahrzeugs in Antriebsverbindung stehen und/oder kann mit einer weiteren Fahrachse des Zugfahrzeugs in Antriebsverbindung bringbar sein. Das erfindungsgemässe Zugfahrzeug weist die oben beschriebenen Vorteile der erfindungsgemässen Getriebeeinheit und/oder Getriebeanordnung auf.

Die erfindungsgemässe Getriebeeinheit, die erfindungsgemässe Getriebeanordnung und das erfindungsgemässe Zugfahrzeug weisen vorteilhafterweise gegenüber den konventionellen Lastschaltgetrieben (PST), wie sie in großen Zugfahrzeugen Anwendung finden, eine deutlich schlankere Bauweise auf und kommen mit weniger Bauraum, sowie Gewicht und rotierender Massenträgheit aus. Die Bauweise ist dadurch kostengünstiger und kraftstoffsparender aufgrund des besseren Wirkungsgrads. Gegenüber diversen Teillastschaltgetrieben (PPST, partial powershift), wie sie in diversen mittleren und kleineren Zugfahrzeugen Anwendung finden, findet hierbei eine Verbesserung der Funktionalität hin zu volllastschaltbaren Getrieben statt. Von Vorteil ist insbesondere beim Umschalten von einer Gruppe zur nächsten keine Unterbrechung der Zugkraft mehr vorhanden und die Arbeit kann bei voller Last fortgesetzt werden, sowohl im Feld als auch im Transport. Dies geschieht mit reduziertem Zusatzgewicht und Bauraumanforderungen, insbesondere verglichen mit konventionellen vollastschaltbaren Getrieben und trotz Erreichen der gleichen Leistungsstärke.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung eines erfindungsgemässen landwirtschaftlichen Zugfahrzeugs, und
- Fig. 2: eine schematische Darstellung eines ersten Ausführungsbeispiels der erfindungsgemässen Getriebeeinheit, und
- Fig. 3: eine schematische Darstellung eines Schaltschemas des ersten Ausführungsbeispiels der erfindungsgemässen Getriebeeinheit, und
- Fig. 4a-f: zeigen jeweils eine schematische Darstellung des ersten Ausführungsbeispiels der erfindungsgemässen Getriebeeinheit sowie die Leistungsflüsse der Gangstufen A bis F der Getriebeeinheit, und
- Fig. 5: zeigt eine schematische Darstellung eines ersten Ausführungsbeispiels der erfindungsgemässen Getriebeanordnung, und
- Fig. 6: zeigt eine schematische Tabelle einer Geschwindigkeitsverteilung in Abhängigkeit von den Gangstufen des ersten Ausführungsbeispiels der erfindungsgemässen Getriebeanordnung, und
- Fig. 7: eine schematische Darstellung eines zweiten Ausführungsbeispiels der erfindungsgemässen Getriebeeinheit, und
- Fig. 8: eine schematische Darstellung eines dritten Ausführungsbeispiels der erfindungsgemässen Getriebeeinheit, und
- Fig. 9: eine schematische Darstellung eines vierten Ausführungsbeispiels der erfindungsgemässen Getriebeeinheit.

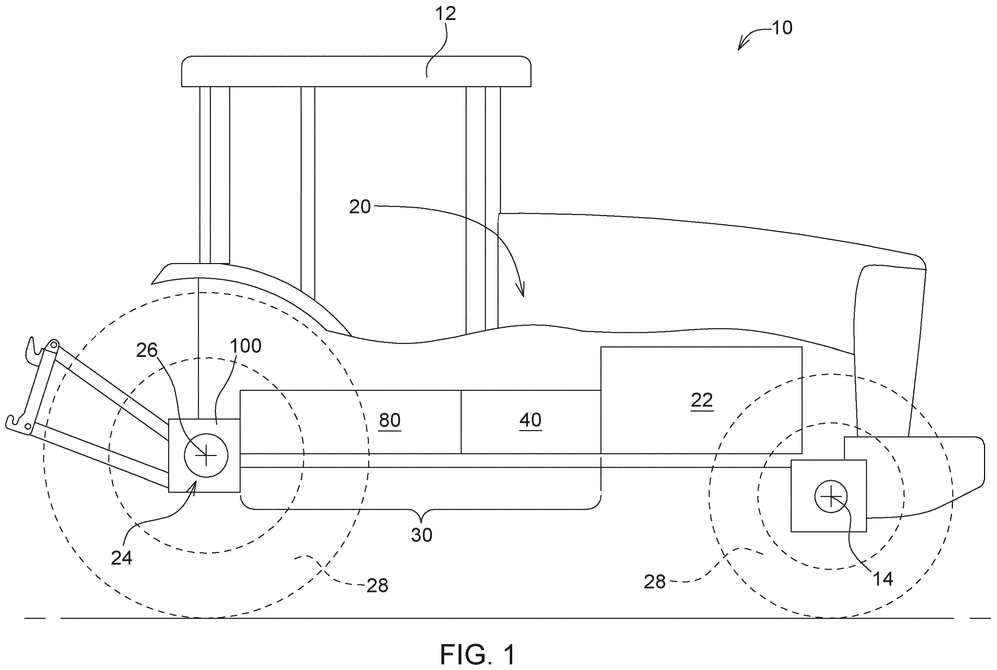

Figur 1 zeigt eine schematische Darstellung eines erfindungsgemässen landwirtschaftlichen Zugfahrzeugs 10, insbesondere in Gestalt eines Traktors, mit einem Antriebsstrang 20 in einer möglichen Ausgestaltung. Der grundsätzliche Aufbau eines landwirtschaftlichen Zugfahrzeugs 10 wird als dem Fachmann bekannt angenommen. Das Zugfahrzeug 10 umfasst ferner eine Kabine 12, eine vordere Fahrzeugachse 14 und eine hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden können.

Der Antriebsstrang 20 umfasst ferner einen Antriebsmotor 22, der als Verbrennungskraftmaschine ausgeführt sein kann, und eine Getriebestruktur, die, wie nachfolgend beschrieben, aus verschiedenen einzelnen Getriebekomponenten zusammengesetzt sein kann. Die vorliegend beschriebene Getriebestruktur kann im Kraft- und Momentenfluss, ausgehend vom Antriebsmotor 22, eine erfindungsgemässe Getriebeanordnung 30, einen Fahrantrieb 24 und ein hinteres Achsgetriebe 32 aufweisen. Die Getriebeanordnung 30 umfasst eine Getriebeeinrichtung 40 und eine erfindungsgemässe Getriebeeinheit 80. Dabei ist die Getriebeeinrichtung 40 dem Antriebsmotor 22 nachgelagert. Die Getriebeeinrichtung 40 ist mit dem Antriebsmotor 22 antriebsverbunden und/oder kann mit dem Antriebsmotor 22 antreibbar sein. Die Getriebeeinheit 80 ist der Getriebeeinrichtung 40 nachgelagert. Dabei ist die Getriebeeinheit 80 mit der Getriebeeinrichtung 40 antriebsverbunden und/oder mit der Getriebeeinrichtung 40 antreibbar. Mit der gezeigten Getriebeanordnung 30 lässt sich Antriebsleistung des Antriebsmotors 22 mit unterschiedlichen Gangstufen auf die Ausgangswelle der Getriebeeinheit übertragen. Die mit der Ausgangswelle in Antriebsverbindung stehende hintere Fahrzeugachse 26, welche eine Drehung der vorderen und/oder hinteren Fahrzeugachse (über damit verbundene Bodeneingriffsmittel) in einen Vorschub des Traktors wandelt, wird daher abhängig von einer in der Getriebeanordnung gewählten Gangstufe mit unterschiedlicher Drehzahl angetrieben. Folglich ist ein mit der Getriebeanordnung ausgestatteter Traktor abhängig von der in der Getriebeanordnung gewählten Gangstufe in unterschiedlichen Geschwindigkeitsbereichen bewegbar.

Das Zugfahrzeug 10 kann eines oder mehrere Bodeneingriffsmittel in Form von Rädern 28 aufweisen, welche mit einem Untergrund zur Obertragung von Antriebskräften in Eingriff stehen und/oder durch die sich das Zugfahrzeug 10 auf dem Untergrund abstützt. Das Zugfahrzeug 10 kann ausserdem ein Fahrgestell aufweisen, wobei das Fahrgestellt insbesondere von den an der vorderen und hinteren Fahrzeugachse 14, 26 aufgehängten Rädern getragen werden kann.

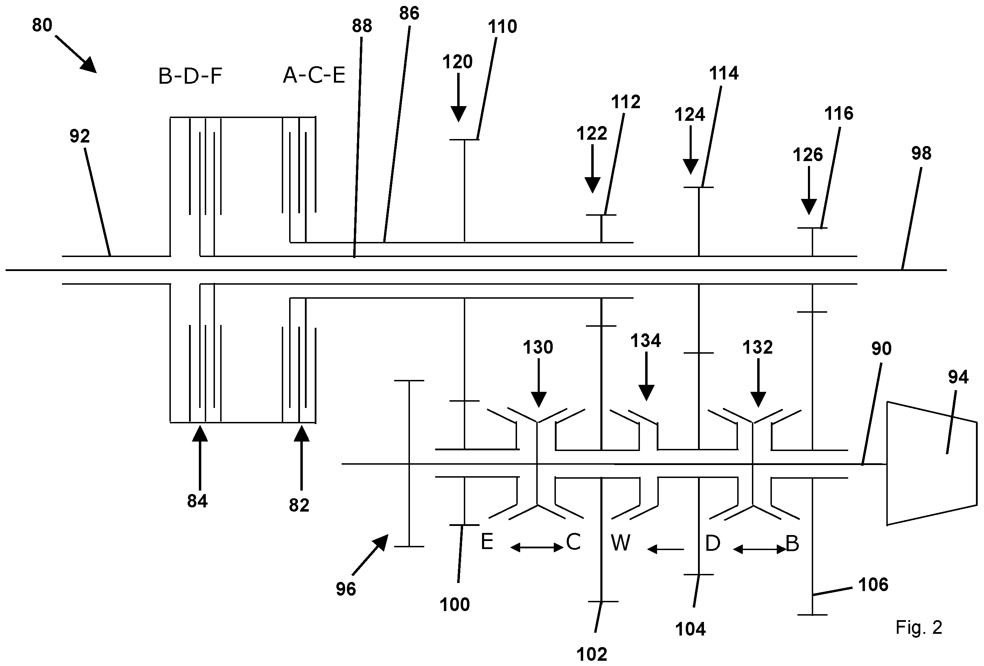

Figur 2 zeigt eine schematische Darstellung, insbesondere ein Strichdiagramm, eines ersten Ausführungsbeispiels der erfindungsgemässen Getriebeeinheit 80. Die in Figur 2 gezeigte Getriebeeinheit 80 ist eine detaillierte schematische Darstellung der in Figur 1 gezeigten Getriebeeinheit 80. Im Folgenden wird deshalb lediglich auf in Figur 1 nicht gezeigte Details eingegangen. Das landwirtschaftliche Zugfahrzeug 10 kann die Getriebeeinheit 80, wie in Figur 1 dargestellt, umfassen.

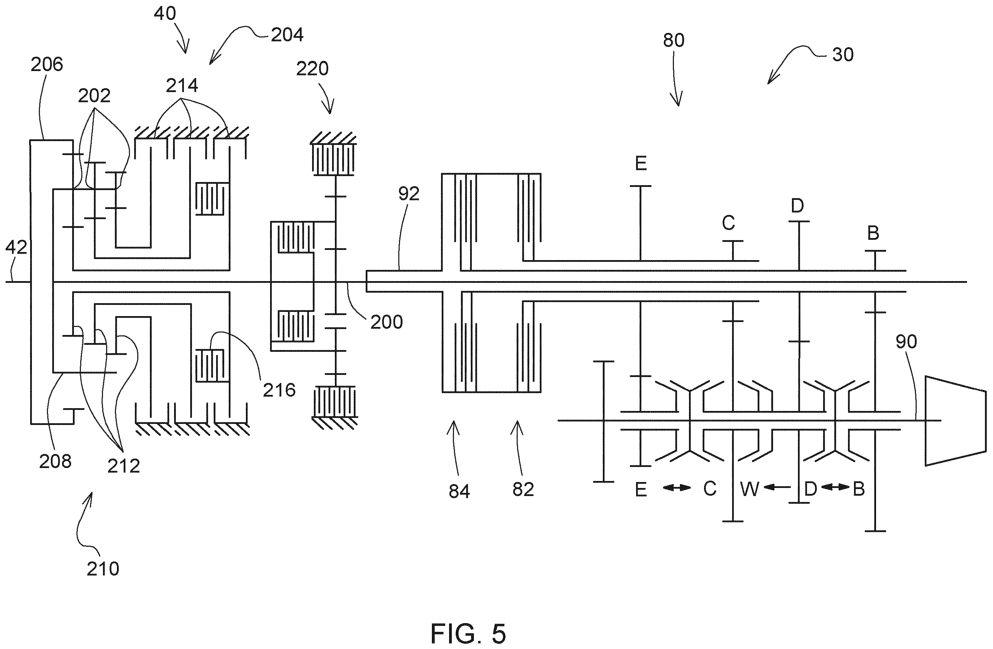

Die Getriebeeinheit 80 umfasst eine erste Kupplung 82 und eine zweite Kupplung 84, deren Eingangsseite, insbesondere gemeinsame Eingangsseite, antreibbar ist. Die Eingangsseite kann mit einer Antriebswelle (Bezugszeichen 200, Fig. 5) der Getriebeeinrichtung 40 verbunden sein, und insbesondere antreibbar verbunden sein oder angetrieben werden. Die Getriebeeinheit 80 umfasst weiter eine erste Eingangswelle 86 und eine zweite Eingangswelle 88 und eine Ausgangswelle 90, insbesondere genau nur eine Ausgangswelle 90. Die Ausgangsseite der ersten Kupplung 82 ist mit der ersten Eingangswelle 86 verbunden, insbesondere ist die erste Kupplung 82 mit der ersten Eingangswelle 86 drehfest verbunden. Die Ausgangsseite der zweiten Kupplung 84 ist mit der zweiten Eingangswelle 88 verbunden, insbesondere ist die zweite Kupplung 84 mit der zweiten Eingangswelle 88 drehfest verbunden. Die Getriebeeinheit 80 umfasst als Eingangsseite eine Kupplungsantriebswelle 92. Die erste und zweite Kupplung 82, 84 sind zwischen einem geöffneten Zustand, in dem die Kupplungsantriebswelle 92 von der ersten und/oder zweiten Eingangswelle 86, 88 antriebsmäßig gelöst ist, und einem geschlossenen Zustand beweglich oder schaltbar, in dem die Kupplungsantriebswelle 92 mit der ersten und/oder zweiten Eingangswelle 86, 88 in Antriebsverbindung steht. Darüber hinaus ist mit der Ausgangswelle 90 ein Hinterachskegeltrieb 94 verbunden. Das Ritzel des Hinterachskegeltriebs 94 kann dabei als Teil der Ausgangswelle 90 ausgebildet sein, insbesondere in die Ausgangswelle 90 integriert sein. Die Ausgangswelle 90 steht ausserdem auch mittels eines Vorderachsantriebsrads 96 mit einer Verzahnung eines Vorderachsantriebs in Verbindung. Das Vorderachsantriebsrads 96 ist ausserdem identisch mit einem Parksperrenrad 96.

Ausserdem sind die erste und/oder zweite Eingangswelle 86, 88 als Hohlwelle ausgebildet und die erste Eingangswelle 86 ist in der zweiten Eingangswelle 88 angeordnet. Darüber hinaus nehmen die erste und/oder zweite Eingangswelle 86, 88 eine Zapfwellen-Antriebswelle 98 zum Antrieb eines Zapfwellengetriebes in sich auf.

Auf der Ausgangswelle 90 sind vier Schalträder 100, 102, 104, 106 drehbar gelagert. Auf der ersten und zweiten Eingangswelle 86, 88 sind insgesamt vier Festräder 110, 112, 114, 116 drehfest angeordnet, insbesondere drehfest mit der ersten und zweiten Eingangswelle 86, 88 verbunden. Dabei sind der ersten und der zweiten Eingangswelle 86, 88 jeweils zwei Festräder zugeordnet. Diese kämmen jeweils mit einem der Ausgangswelle 90 zugeordneten Schalträdern 100, 102, 104, 106. Die Getriebeeinheit 80 weist mehrere Radsätze, insbesondere vier Radsätze 120, 122, 124, 126, zur Einrichtung von Gangstufen B, C, D, E auf. Dazu weisen mindestens ein erster Radsatz 120 und ein zweiter Radsatz 122 jeweils das Festrad 110, 112 an der ersten Eingangswelle 86 und jeweils das Schaltrad 100, 102 an der Ausgangswelle 90 auf. Ausserdem weisen mindestens ein dritter Radsatz 124 und ein vierter Radsatz 126 jeweils das Festrad 114, 116 an der zweiten Eingangswelle 88 und jeweils das Schaltrad 104, 106 an der Ausgangswelle 90 auf. Im Speziellen umfasst der erste Radsatz 120 ein erstes Festrad 110, das mit einem ersten Schaltrad 100 auf der Ausgangswelle 90 kämmt. Der zweite Radsatz 122 umfasst ein zweites Festrad 112 das mit einem zweiten Schaltrad 102 in Eingriff steht. Der dritte Radsatz 124 umfasst ein drittes Festrad 114, das mit einem dritten Schaltrad 104 kämmt. Der vierte Radsatz 126 umfasst ein viertes Festrad 116, das mit einem vierten Schaltrad 106 in Eingriff steht.

Die Getriebeeinheit 80 umfasst weiter genau zwei Koppelelemente 130, 132, also ein erstes Koppelelement 130 und ein zweites Koppelelement 132. Das erste Koppelelement 130 ist zwischen dem ersten und zweiten Radsatz 120, 122 und das zweite Koppelelement 132 ist zwischen dem dritten und vierten Radsatz 124, 126 auf der Ausgangswelle 90 angeordnet. Die Schalträder 100, 102, 104, 106 sind mit dem ersten oder zweiten Koppelelement 130, 132 mit der Ausgangswelle 90 drehfest und lösbar verbindbar. Im Speziellen sind also das erste Schaltrad 100 oder das zweite Schaltrad 102 mit dem ersten Koppelelement 130 mit der Ausgangswelle 90 drehfest und lösbar verbindbar. Ausserdem sind das dritte Schaltrad 104 oder das vierte Schaltrad 106 mit dem zweiten Koppelelement 132 mit der Ausgangswelle 90 drehfest und lösbar verbindbar. Somit ist jeweils ein Koppelelement 130, 132 zwischen jeweils zwei Schalträdern 100, 102, 104, 106 angeordnet, die auf der gleichen Eingangswelle 86, 88, also der ersten oder zweiten Eingangswelle 86, 88 angeordnet sind. Das erste und zweite Koppelelement 130, 132 sind drehfest und axial verschiebbar auf der Ausgangswelle 90 gelagert. Das erste und zweite Koppelelement 130, 132 sind als Schaltpakete ausgebildet, die Stellvorrichtungen, insbesondere Schiebemuffen, und Synchronringe umfassen. Dadurch sind die drehbar gelagerten Schalträder 100, 102, 104, 106 über die Koppelelemente 130, 132 schaltbar, so dass abhängig von einem Schaltzustand der Koppelelemente 130, 132 zwischen der Ausgangswelle 90 und der jeweiligen ersten und/oder zweiten Eingangswelle 86, 88 jeweils ein festes Drehzahlverhältnis herstellbar ist.

Die Getriebeeinheit 80 umfasst ausserdem ein Schaltelement 134 zum Koppeln zweier Schalträder 102, 104. Im Speziellen sind das zweite und dritte Schaltrad 102, 104 mit dem Schaltelement 134 koppelbar. Das zweite und dritte Schaltrad 102, 104 sind mit dem Schaltelement 134 drehfest und lösbar verbindbar. Das zweite und dritte Schaltrad 102, 104 sind mit dem Schaltelement 134 derart koppelbar, insbesondere derart selektiv koppelbar, dass über den zweiten und dritten Radsatz 122, 124 wenigstens eine Windungsgangstufe A, F ausbildbar ist, d. h. insbesondere also die erste und zweite Eingangswelle 86, 88 miteinander koppelbar sind. Mit anderen Worten, das Schaltelement 134 kann insbesondere zwischen einer ersten Schaltstellung, in der das zweite Schaltrad 104 und das dritte Schaltrad 102 gekoppelt sind, und einer zweiten Schaltstellung beweglich sein, in der das zweite Schaltrad 104 und das dritte Schaltrad 102 voneinander gelöst sind. Das Schaltelement 134 ist als eine einseitig wirkende Synchronisierung ausgebildet. Das Schaltelement 134 ist zwischen dem ersten und zweiten Koppelelement 130, 132 entlang der Ausgangswelle 90 angeordnet sein.

Abhängig vom Schaltzustand der ersten und zweiten Kupplung 82, 84 sowie vom Schaltzustand des ersten und zweiten Koppelelements 130, 132 und des Schaltelements 134 kann die Getriebeeinheit 80 mit jede der Kupplungen 82, 84 in jeweils zwei Gangstufen, also insgesamt vier Gangstufen B, C, D, E, und jeweils eine zusätzlich Gangstufen als Windungsgangstufe A,F, also insgesamt zwei Windungsgangstufen A, F, und somit in insgesamt sechs Gangstufen bzw. Gruppengangstufen geschaltet werden. Dabei kann die Getriebeeinheit 80 unter Last geschalten werden, indem während des Öffnens der einen Kupplung, beispielsweise der ersten Kupplung 82, die andere Kupplung, beispielsweise die zweite Kupplung 84, geschlossen wird, so dass eine zwischen der ersten oder zweiten Eingangswelle 86, 88 und der Kupplungsantriebswelle 92 bestehende Antriebsverbindung durch eine über die jeweils andere Eingangswelle 86, 88 herzustellende Antriebsverbindung ersetzbar ist, ohne eine Antriebsverbindung zwischen der ersten oder zweiten Eingangswelle 86, 88 und Ausgangswelle 90 zu unterbrechen. Zur Vorwahl einer gewünschten Gangstufe wird das betreffende Schaltrad, also insbesondere das erste bis vierte Schaltrad 100, 102, 104, 106, durch das jeweils zugeordnete erste oder zweite Koppelelement 130, 132 drehfest mit der Ausgangswelle 90 verbunden, sodass die Gangstufen B, C, D, E realisiert werden. Falls eine Gangstufen A, F als Windungsgangstufe geschaltet wird, werden das zweite und dritte Schaltrad 102, 104 durch das Schaltelement 134 drehfest miteinander verbunden und gleichzeitig die Gangstufen E oder B aktiviert, also gleichzeitig das erste Schaltrad 100 durch das erste Koppelelement 130 (Gangstufe E) oder das vierte Schaltrad 106 durch das zweite Koppelelement 132 mit der Ausgangswelle 90 (Gangstufe B) verbunden. Somit läuft jede Windungsgangstufe über drei Radsätze. Die Getriebeeinheit 80 umfasst also sechs Gangstufen, die insbesondere lastschaltbar sind. Im Speziellen sind die erste und der sechste Gangstufe A, F ein Windungsgang, also als Windungsgangstufe realisiert.

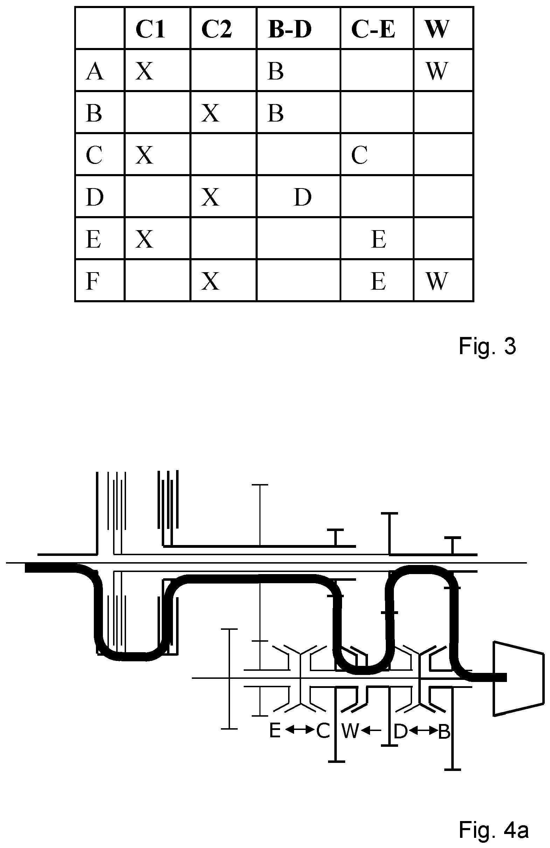

Figur 3 zeigt eine schematische Darstellung eines Schaltschemas des ersten Ausführungsbeispiels der erfindungsgemässen Getriebeeinheit 80. Das in Figur 3 gezeigte Schaltschema der Getriebeeinheit umfasst alle Merkmale der in den Figuren 1 und 2 gezeigten Getriebeeinheit 80, sodass im Folgenden lediglich auf Details und/oder Unterschiede eingegangen wird. Gemäß des in der Tabelle angegebenen Schaltschemas wird die erste Gangstufe A über die erste Kupplung 82 und über das in Richtung B verschobene zweite Koppelelement 132 sowie über das aktivierte Schaltelement 134, also das in Richtung W verschobene Schaltelement 134, als Windungsgangstufe geschaltet. Die zweite Gangstufe B wird über die zweite Kupplung 84 und über das in Richtung B verschobene zweite Koppelelement 132 realisiert. Die dritte Gangstufe C wird über die erste Kupplung 82 und über das in Richtung C verschobene erste Koppelelement 130 geschaltet. Die vierte Gangstufe D wird wieder über die zweite Kupplung 84 und über das in Richtung D verschobene zweite Koppelelement 132 geschaltet. Die fünfte Gangstufe wird über die erste Kupplung 82 und über das in Richtung E verschobene erste Koppelelement 130 realisiert. Die sechste Gangstufe F wird über die zweite Kupplung und über das in Richtung E verschobene erste Koppelelement 130 sowie über das in Richtung W verschobene Schaltelement 134 als Windungsgang F geschaltet. Die Verschiebung der Koppelelemente 130, 132 und/oder des Schaltelements 134 ist dabei gleichbedeutend mit einer axialen Verschiebung des ersten oder zweiten Koppelelements 130, 132 und/oder des Schaltelements 134 und der drehfesten Verbindung des zugeordneten Schaltrads 100, 102, 104, 106 durch das erste oder zweite Koppelelement 130, 132 mit der Ausgangswelle 90 und/oder der drehfesten Verbindung des zweiten und dritten Schaltrads 102, 104 bei gleichzeitiger drehbarer Anordnung auf der Ausgangswelle 90.

Die Figuren 4a bis 4f zeigen eine schematische Darstellung, insbesondere ein Strichdiagramm, des ersten Ausführungsbeispiels der erfindungsgemässen Getriebeeinheit 80 sowie die Leistungsflüsse der Gangstufen A bis F der Getriebeeinheit 80. Die in den Figuren 4a bis 4f gezeigte Getriebeeinheit 80 entspricht im Wesentlichen der in den Figuren 1 bis 3 gezeigten Getriebeeinheit 80, sodass im Folgenden lediglich auf Details und/oder Unterschiede eingegangen wird.

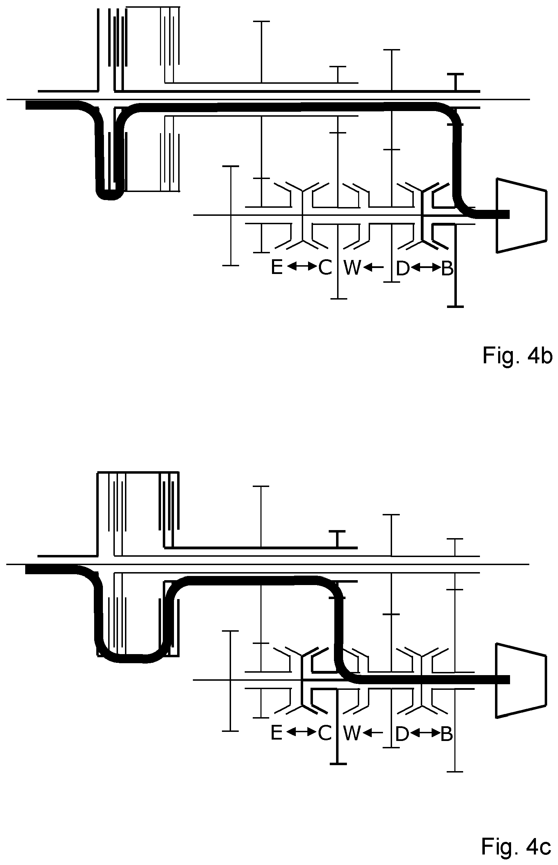

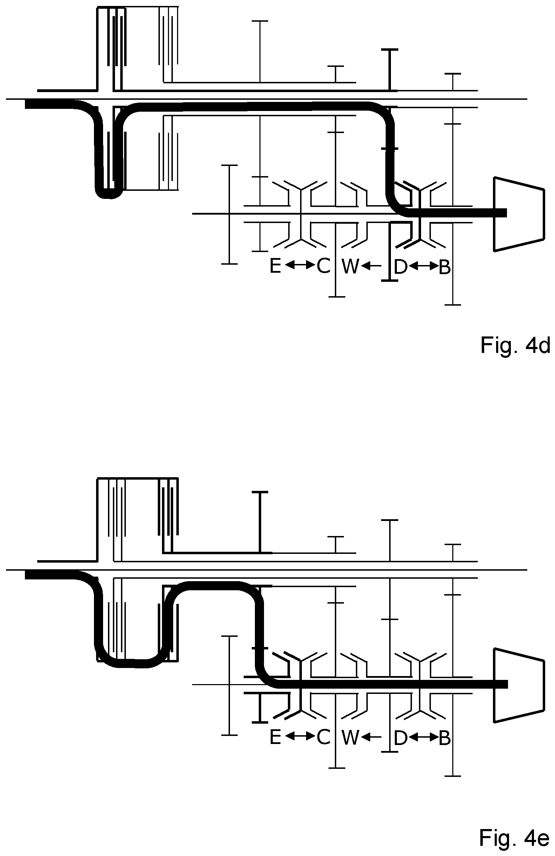

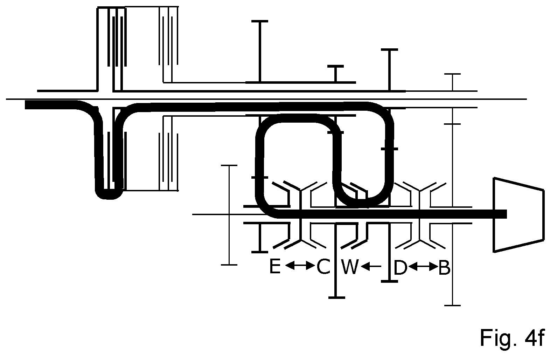

Figur 4a zeigt die erste Gangstufe A, die als Windungsgangstufe über den zweiten, dritten und vierten Radsatz 122, 124, 126 realisiert ist. Figur 4b zeigt die zweite Gangstufe B, die den vierte Radsatz 126 verwendet. Figur 4c zeigt, wie zum Realisieren der dritten Gangstufe C der zweite Radsatz 122 eingesetzt wird. Figur 4d zeigt die vierte Gangstufe D, bei welcher der dritte Radsatz 124 eingesetzt wird. Figur 4e zeigt die fünfte Gangstufe E, die den ersten Radsatz 120 verwendet. Figur 4f zeigt die sechste Gangstufe F, die als Windungsgangstufe realisiert ist und den ersten bis dritten Radsatz 120, 122, 124 einsetzt. Wie in den Figuren 4a und 4f gezeigt sind die höchste Gangstufe, also die sechste Gangstufe F und die niedrigste Gangstufe, also die erste Gangstufe A, als Windungsgangstufen realisiert.

Figur 5 zeigt eine schematische Darstellung, insbesondere ein Strichdiagramm, eines ersten Ausführungsbeispiels der erfindungsgemässen Getriebeanordnung 30. Die in Figur 5 gezeigte Getriebeanordnung 30 umfasst die Getriebeeinheit 80, wobei die Getriebeeinheit 80 im Wesentlichen der in den Figuren 1 bis 4f gezeigten Getriebeeinheit 80 entspricht, sodass im Folgenden lediglich auf Details und/oder Unterschiede eingegangen wird. Die Getriebeanordnung 30 ist für einen Antriebsstrang 20 eines landwirtschaftlichen Zugfahrzeugs 10 vorgesehen, um einen Antriebsmotor 22 mit einem Fahrantrieb 24 des Fahrzeugs 10 zu verbinden. Die Getriebeanordnung 30 umfasst die beschriebene Getriebeeinheit 80 und eine Getriebeeinrichtung 40. Die Getriebeeinrichtung 40 ist der Getriebeeinheit 80 vorgelagert. Die Getriebeeinrichtung 40 umfasst eine Antriebswelle 200, die mit der Eingangsseite, insbesondere der Kupplungsantriebswelle 92, der ersten und zweiten Kupplungen 82, 84 der Getriebeeinheit 80 antriebsverbunden ist.

Die Getriebeanordnung 30 umfasst im Wesentlichen zwei Funktionsgruppen, die jeweils über Wellen miteinander in Antriebsverbindung stehen. Eingangsseitig der Getriebeanordnung 30 ist die Getriebeeinrichtung 40 angeordnet. Die Getriebeeinrichtung 40 kann in Antriebsverbindung mit dem Antriebsmotor 22 stehen und vom Antriebsmotor 22 antreibbar sein. Die Getriebeeinrichtung 40 steht über eine Antriebswelle 200, die als eine Hohlwelle ausgebildet ist, mit der Getriebeeinheit 80 in Antriebsverbindung. Die Getriebeeinheit 80 weist ausgangsseitig die Ausgangswelle 90 auf, die zugleich Abtriebswelle der Getriebeanordnung 30 ist.

Die Getriebeeinrichtung 40 ist als ein Mehrstufengetriebe ausgebildet, das in eine Mehrzahl von Lastschaltstufen, hier vier Lastschaltstufen, aufweist. Die Getriebeeinrichtung kann insbesondere lastschaltbar, insbesondere volllastschaltbar sein. Die Getriebeeinrichtung 40 ist in Planetenbauweise ausgeführt. Darüber hinaus kann die Getriebeeinrichtung 40 koaxial zur Kupplungsantriebswelle 92 der Getriebeeinheit 80 und/oder einer Motorabtriebswelle 42 angeordnet sein. Die Getriebeeinrichtung 80, insbesondere das Mehrstufengetriebe, umfasst einen Planetenradsatz 210 mit drei integrierten Planetenstufen 202. Die Getriebeeinrichtung 40 weist ausserdem auch eine den Planetenstufen 202 zugeordnete Kupplungsanordnung 204 auf. Der Planetenradsatz 210 umfasst weiter ein von der Motorabtriebswelle 42 angetriebenes Hohlrad 206 und einen Planetenradträger 208, der für jede Planetenstufe 202 eines oder mehrere Planetenräder, insbesondere pro Planetenstufe zwei, drei oder vier Planetenräder umfasst, die drehfest mit dem Planetenradträger 208 verbunden sind. Jede Planetenstufe umfasst ausserdem jeweils ein Sonnenrad 212, dass jeweils mit einer Hohlwelle drehfest verbunden ist. Die jeweilige Hohlwelle ist mit jeweils einer Kupplungseinheit 214 verbunden, wobei die Kupplungseinheit 214 bevorzugt als Bremse ausgebildet sein kann. Dabei können die eine Planetenstufe zugeordneten Planetenräder an dem jeweils zugeordneten Sonnenrad 212 abrollen. Darüber hinaus umfasst die Kupplungsanordnung 204 einen zusätzlichen Direktgang zwischen zwei Kupplungseinheiten, d.h. die Kupplungseinheiten sind mittels einer Direktkupplung 216 koppelbar. Im Speziellen umfasst die als Mehrstufengetriebe ausgebildet Getriebeeinrichtung 40 den Planetenradsatz 210 mit drei integrierten Planetenstufen 202. Die erste Planetenstufe kann ein erstes Sonnenrad umfassen, dass mit einer ersten Planetenwelle verbunden ist, insbesondere drehfest verbunden ist. Die erste Planentenwelle wiederum ist mit der ersten Kupplungseinheit verbunden. Die zweite Planetenstufe kann ein zweites Sonnenrad umfassen, dass mit einer zweiten Planetenwelle verbunden ist, insbesondere drehfest verbunden ist. Die zweite Planentenwelle wiederum ist mit der zweite Kupplungseinheit verbunden. Die dritte Planetenstufe kann ein drittes Sonnenrad umfassen, dass mit einer dritten Planetenwelle verbunden ist, insbesondere drehfest verbunden ist. Die dritte Planentenwelle wiederum ist mit der dritte Kupplungseinheit verbunden. Darüber hinaus können die zweite und dritte Kupplungseinheiten mittels der Direktkupplung 216 koppelbar sein. Im Weiteren kann die Getriebeanordnung 30, insbesondere die Getriebeeinrichtung 40, eine Lastschaltwendeeinheit 220 zur Umkehr der Fahrtrichtung umfassen. Die Lastschaltwendeeinheit 220 ist dann der Getriebeeinheit 80 vorgelagert und dem Mehrstufengetriebe nachgelagert. Der Planetenradträger 208 ist mit der Lastschaltwendeeinheit 220 mittels einer Welle verbunden sein, insbesondere drehfest verbunden, wobei die Welle mit dem Planetenradträger 208 antreibbar ist, und/oder in Antriebsverbindung steht.

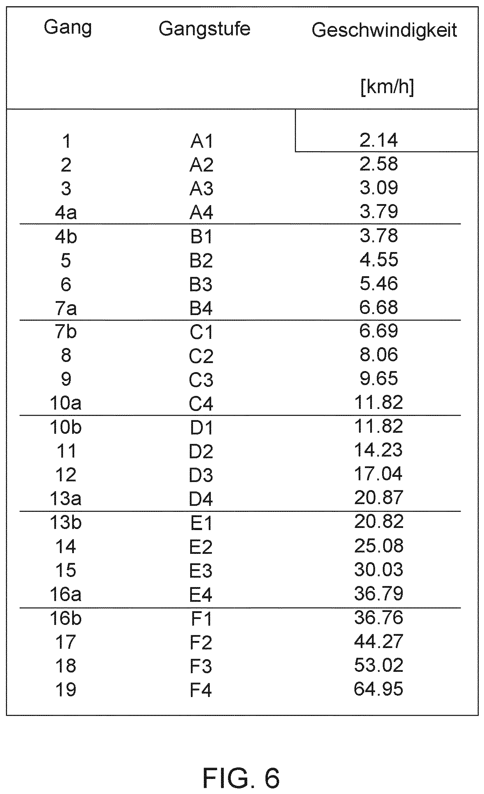

Figur 6 zeigt eine Tabelle einer Geschwindigkeitsverteilung in Abhängigkeit von den Gangstufen des ersten Ausführungsbeispiels der erfindungsgemässen Getriebeanordnung 30. Figur 6 bezieht sich auf die in den Figuren 1 bis 5 gezeigte Getriebeeinheit 80 bzw. Getriebeanordnung 30, sodass im Folgenden lediglich auf die Unterschiede eingegangen wird. Die Tabelle zeigt die einzelnen Gangstufen der Getriebeanordnung 30. Die Gangstufen bzw. Gruppengangstufen A, B, C, D, E, F der Getriebeeinheit 80 werden jeweils pro Gruppengangstufe mit den Gangstufen bzw. Lastschaltstufen 1, 2, 3, 4 der Getriebeeinrichtung 40 erweitert, sodass sich insgesamt 24 Gangstufen für die Getriebeanordnung 30 ergeben. Die vorteilhafte optimale und breite Verteilung der Geschwindigkeit der Zugfahrzeugs zwischen ca. 2 km/h und ca. 65 km/h ist gezeigt.

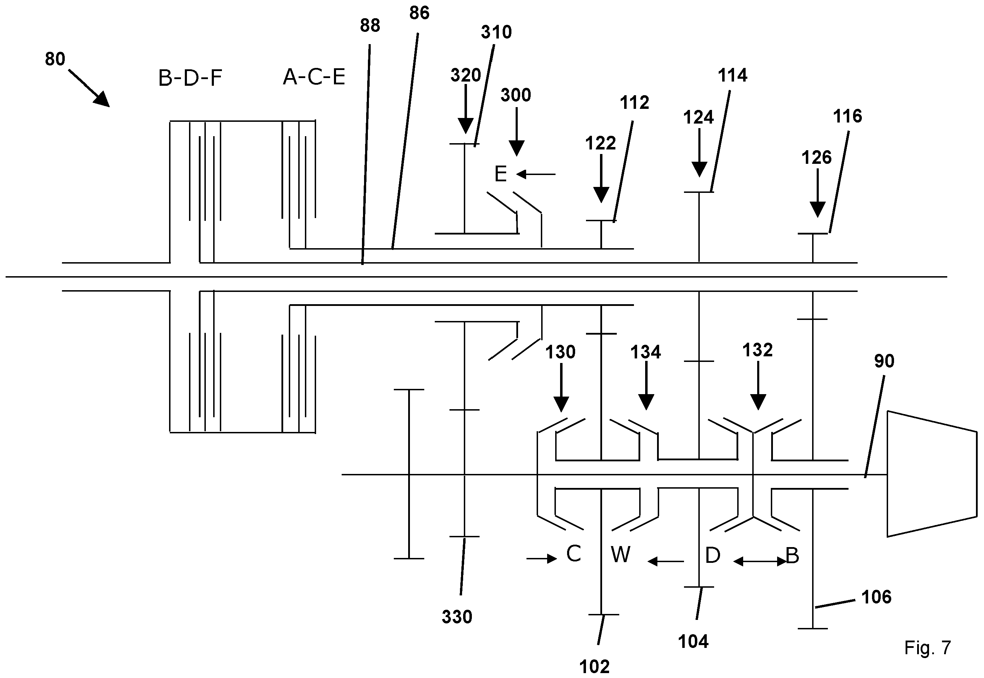

Figur 7 zeigt eine schematische Darstellung, insbesondere ein Strichdiagramm, eines zweiten Ausführungsbeispiels der erfindungsgemässen Getriebeeinheit 80. Die in Figur 7 gezeigte Getriebeeinheit 80 entspricht im Wesentlichen der in den Figuren 1 bis 6 gezeigten Getriebeeinheit 80, sodass im Folgenden lediglich auf Details und/oder Unterschiede eingegangen wird. Auf der Ausgangswelle 90 sind im Gegensatz zum ersten Ausführungsbeispiel nur drei Schalträder, also das zweite, dritte und vierte Schaltrad 102, 104, 106 drehbar gelagert. Anstatt des ersten Schaltrads 100 gemäss dem ersten Ausführungsbeispiel der Getriebeeinheit 80, ist ein erstes Festrad 330 drehfest auf der Ausgangswelle 90 angeordnet, insbesondere drehfest mit der Ausgangswelle 90 verbunden. Ausserdem ist anstatt des ersten Festrads 110 auf der ersten Eingangswelle 86 ein erstes Schaltrad 310 drehbar auf der ersten Eingangswelle 86 gelagert. Das erste Schaltrad 310 und das erste Festrad 330 stehen miteinander in Eingriff. Die Getriebeeinheit 80 weist vier Radsätze 320, 122, 124, 126, zur Einrichtung von Gangstufen B, C, D, E auf, wobei der wesentliche Unterschied zum ersten Ausführungsbeispiel in der Anordnung des ersten Schaltrads 310 auf der ersten Eingangswelle 86 und des ersten Festrads 330 auf der Ausgangswelle 90, also im ersten Radsatz 320 besteht. Die Getriebeeinheit 80 umfasst ein drittes Koppelelement 300. Das dritte Koppelelement 300 ist zwischen dem ersten und zweiten Radsatz 320, 122 auf der ersten Eingangswelle 86 angeordnet. Das erste Schaltrad 310 ist mit dem dritten Koppelelement 300 mit der ersten Eingangswelle 86 drehfest und lösbar verbindbar. Das erste Koppelelement 130 ist zwischen dem ersten und zweiten Radsatz 320, 122 und das zweite Koppelelement 132 ist zwischen dem dritten und vierten Radsatz 124, 126 auf der Ausgangswelle 90 angeordnet. Das dritte Koppelelement 300 ist drehfest und axial verschiebbar auf der ersten Eingangswelle 86 gelagert. Das dritte Koppelelement 300 ist als Schaltpaket ausgebildet, das eine Stellvorrichtung, insbesondere eine Schiebemuffe, und einen oder mehrere Synchronringe umfasst. Dadurch ist das drehbar gelagerte erste Schaltrad 310 über das dritte Koppelelement 300 schaltbar, so dass abhängig von einem Schaltzustand des dritten Koppelelements 300 zwischen der ersten Eingangswelle 86 und der Ausgangswelle 90 ein festes Drehzahlverhältnis herstellbar ist. Das erste und dritte Koppelelement 130, 300 sind als einseitig schaltbare Schaltpakete ausgebildet, wobei die Synchronringe nur auf einer Seite, also rechts oder links, insbesondere also in axiale Richtung rechts oder links, der Stellvorrichtung oder Schiebemuffe angeordnet sind.

Abhängig vom Schaltzustand der ersten und zweiten Kupplung 82, 84 sowie vom Schaltzustand des ersten, zweiten und dritten Koppelelements 130, 132, 320 und des Schaltelements 134 kann die Getriebeeinheit 80 mit jede der Kupplungen 82, 84 in jeweils zwei Gangstufen, also insgesamt vier Gangstufen B, C, D, E, und jeweils eine zusätzlich Gangstufen als Windungsgangstufe A,F, also insgesamt zwei Windungsgangstufen A, F, und somit in insgesamt sechs Gangstufen bzw. Gruppengangstufen geschaltet werden. Dabei kann die Getriebeeinheit 80 unter Last geschalten werden. Die erste und der sechste Gangstufe A, F sind wiederum als Windungsgang, also als Windungsgangstufe realisiert.

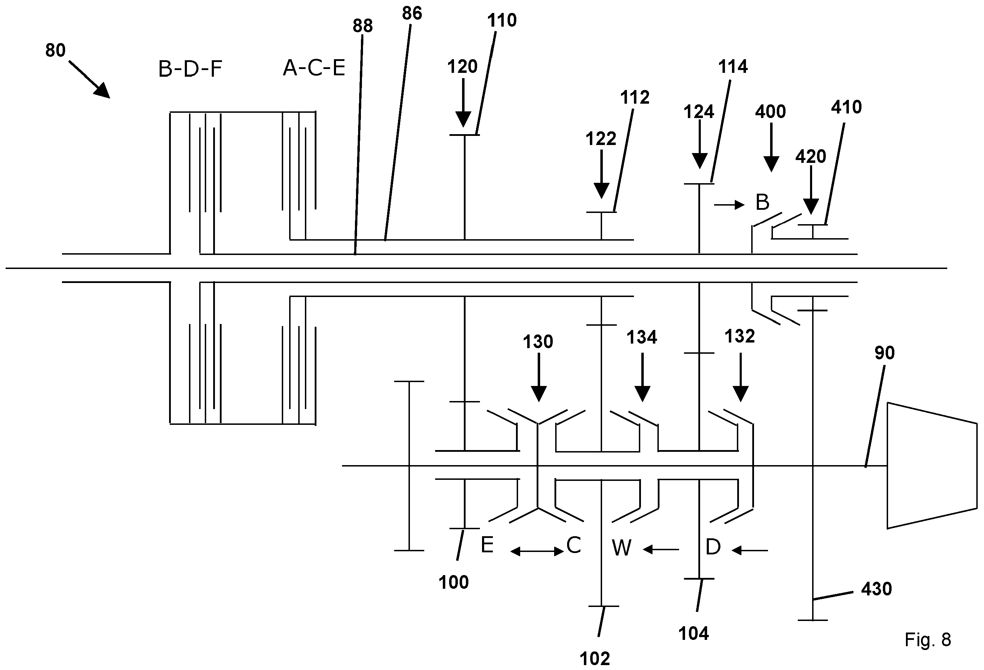

Figur 8 zeigt eine schematische Darstellung, insbesondere ein Strichdiagramm, eines dritten Ausführungsbeispiels der erfindungsgemässen Getriebeeinheit 80. Die in Figur 8 gezeigte Getriebeeinheit 80 entspricht im Wesentlichen der in den Figuren 1 bis 7 gezeigten Getriebeeinheit 80, sodass im Folgenden lediglich auf Details und/oder Unterschiede eingegangen wird.

Auf der Ausgangswelle 90 sind im Gegensatz zum ersten Ausführungsbeispiel nur drei Schalträder, insbesondere das erste, zweite und dritte Schaltrad 100, 102, 104 drehbar gelagert. Anstatt des vierten Schaltrads 106 ist ein viertes Festrad 430 drehfest auf der Ausgangswelle 90 angeordnet, insbesondere drehfest mit der Ausgangswelle 90 verbunden. Ausserdem ist auf der zweiten Eingangswelle 88 anstatt des vierten Festrads ein viertes Schaltrad 410 drehbar gelagert. Das vierte Schaltrad 410 und das vierte Festrad 430 stehen miteinander in Eingriff. Die Getriebeeinheit 80 weist vier Radsätze 120, 122, 124, 420 zur Einrichtung von Gangstufen B, C, D, E auf. Im Unterschied zum ersten und zweiten Ausführungsbeispiel weist also ein vierter Radsatz 420 das vierte Schaltrad 410 an der zweiten Eingangswelle 88 und das vierte Festrad 430 an der Ausgangswelle 90 auf. Die Getriebeeinheit 80 weist anstatt eines dritten Koppelelements 300 ein viertes Koppelelement 400 auf. Das vierte Koppelelement 400 ist zwischen dem dritten und vierten Radsatz 124, 420 auf der zweiten Eingangswelle 88 angeordnet. Das vierte Schaltrad 410 ist mit dem vierten Koppelelement 400 mit der zweiten Eingangswelle 88 drehfest und lösbar verbindbar.

Das vierte Koppelelement 400 ist drehfest und axial verschiebbar auf der zweiten Eingangswelle 88 gelagert. Das vierte Koppelelement 400 ist als Schaltpaket ausgebildet, das eine Stellvorrichtung, insbesondere eine Schiebemuffe, und einen oder mehrere Synchronringe umfasst. Dadurch ist das drehbar gelagerte vierte Schaltrad 410 über das vierte Koppelelement 400 schaltbar, so dass abhängig von einem Schaltzustand des vierten Koppelelements 400 zwischen der zweiten Eingangswelle 88 und der Ausgangswelle 90 ein festes Drehzahlverhältnis herstellbar ist. Das zweite und vierte Koppelelement 132, 400 sind als einseitige Schaltpakete auf der zweiten Eingangswelle 88 und der Ausgangswelle 90 ausgebildet, wobei die Synchronringe nur auf einer Seite, also rechts oder links, insbesondere also in axiale Richtung rechts oder links, der Stellvorrichtung oder Schiebemuffe angeordnet sind.

Abhängig vom Schaltzustand der ersten und zweiten Kupplung 82, 84 sowie vom Schaltzustand des ersten, zweiten und vierten Koppelelements 130, 132, 420 und des Schaltelements 134 kann die Getriebeeinheit 80 mit jede der Kupplungen 82, 84 in jeweils zwei Gangstufen, also insgesamt vier Gangstufen B, C, D, E, und jeweils eine zusätzlich Gangstufen als Windungsgangstufe A,F, also insgesamt zwei Windungsgangstufen A, F, und somit in insgesamt sechs Gangstufen bzw. Gruppengangstufen geschaltet werden. Dabei kann die Getriebeeinheit 80 unter Last geschalten werden. Die erste und der sechste Gangstufe A, F sind wiederum als Windungsgang, also als Windungsgangstufe realisiert.

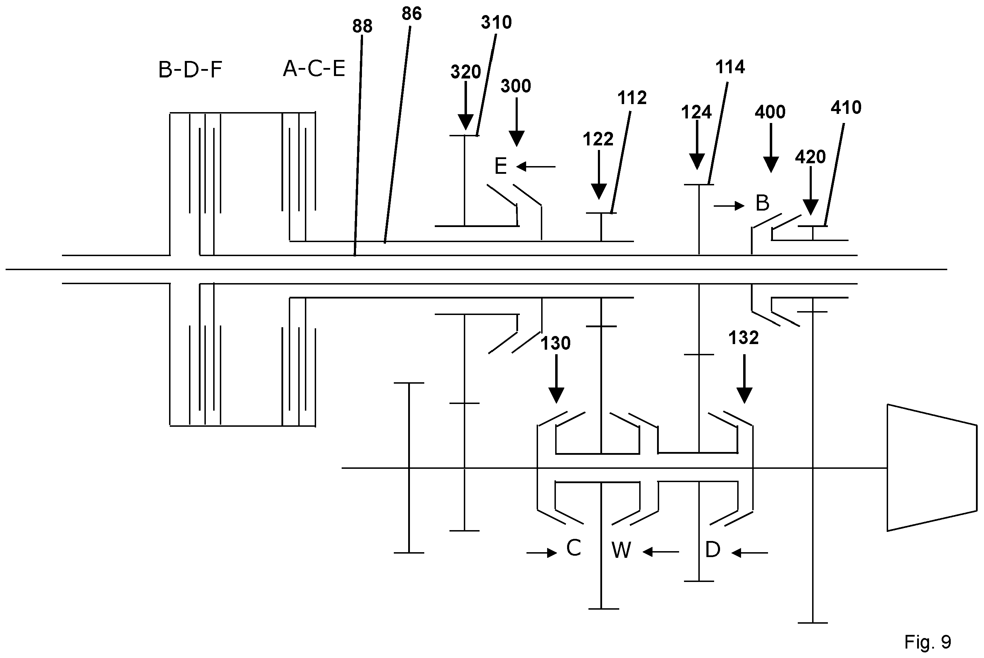

Figur 9 zeigt eine schematische Darstellung, insbesondere ein Strichdiagramm, eines vierten Ausführungsbeispiels der erfindungsgemässen Getriebeeinheit 80. Die in Figur 9 gezeigte Getriebeeinheit 80 entspricht im Wesentlichen der in den Figuren 1 bis 8 gezeigten Getriebeeinheit 80, weshalb im Folgenden lediglich auf Details und/oder Unterschiede eingegangen wird. Das vierte Ausführungsbeispiel ist eine Kombination des zweiten und dritten Ausführungsbeispiels.

Auf der Ausgangswelle 90 sind nur zwei Schalträder, das zweite und dritte Festrad 102, 104 drehbar gelagert. Zusätzlich sind zwei Festräder, das erste und vierte Festrad 330, 430 drehfest auf der Ausgangswelle 90 angeordnet, insbesondere drehfest mit der Ausgangswelle 90 verbunden. Auf der ersten Eingangswelle 86 ist das zweite Festrad 112 drehfest angeordnet, insbesondere drehfest mit der ersten Eingangswelle 86 verbunden. Auf der zweiten Eingangswelle 88 ist das dritte Festrad 114 drehfest angeordnet, insbesondere drehfest mit der zweiten Eingangswelle 88 verbunden.

Auf der ersten Eingangswelle 86 ist ausserdem das erste Schaltrad 310 drehbar gelagert und auf der zweiten Eingangswelle 88 ist das vierte Schaltrad 410 drehbar angeordnet. Die Getriebeeinheit 80 weist das dritte Koppelelements 300 und das vierte Koppelelement 400 auf. Zwischen dem ersten und zweiten Radsatz 320, 122 ist somit auf der ersten Eingangswelle 86 das dritte Koppelelement 300 angeordnet und auf der Ausgangswelle 90 das erste Koppelelement 130 angeordnet. Zwischen dem dritten und vierten Radsatz 124, 420 ist somit auf der zweiten Eingangswelle 88 das vierte Koppelelement 400 angeordnet und auf der Ausgangswelle 90 das zweite Koppelelement 132 angeordnet.

Abhängig vom Schaltzustand der ersten und zweiten Kupplung 82, 84 sowie vom Schaltzustand des ersten, zweiten, dritten und vierten Koppelelements 130, 132, 320, 420 und des Schaltelements 134 kann die Getriebeeinheit 80 mit jede der Kupplungen 82, 84 in jeweils zwei Gangstufen, also insgesamt vier Gangstufen B, C, D, E, und jeweils eine zusätzlich Gangstufen als Windungsgangstufe A,F, also insgesamt zwei Windungsgangstufen A, F, und somit in insgesamt sechs Gangstufen bzw. Gruppengangstufen geschaltet werden. Dabei kann die Getriebeeinheit 80 unter Last geschalten werden. Die erste und der sechste Gangstufe A, F sind wiederum als Windungsgang, also als Windungsgangstufe realisiert.

## Patentansprüche

1. Getriebeeinheit für einen Antriebsstrang (20) eines landwirtschaftlichen Zugfahrzeugs, insbesondere für einen Traktor, mit einer ersten Kupplung (82) und einer zweiten Kupplung (84), deren Eingangsseite antreibbar ist, mit einer ersten Eingangswelle (86) und einer zweiten Eingangswelle (88) und einer Ausgangswelle (90), und die erste Eingangswelle als Hohlwelle ausgebildet ist,
wobei die erste Kupplung (82) mit der ersten Eingangswelle (86) drehfest verbunden ist und die zweite Kupplung (84) mit der zweiten Eingangswelle (88) drehfest verbunden ist,
und die Getriebeeinheit (80) eine Mehrzahl von Radsätzen (120, 122, 124, 126, 320, 420) mit jeweils einem Schaltrad (100, 102, 104, 106, 310, 410) und einem Festrad (110, 112, 114, 116, 330, 430) zur Einrichtung von Gangstufen (B, C, D, E) aufweist,
wobei mindestens ein zweiter Radsatz (102) jeweils das Festrad (112) an der ersten Eingangswelle (86) und jeweils das Schaltrad (102) an der Ausgangswelle (90) aufweist, und mindestens ein dritter Radsatz (104) das Festrad (114) an der zweiten Eingangswelle (88) und jeweils das Schaltrad (104) an der Ausgangswelle (90) aufweist,
und mit einem Schaltelement (134) zum Koppeln zweier Schalträder (102, 104), wobei das Schaltrad (102) des zweiten Radsatzes (122) und das Schaltrad (104) des dritten Radsatzes (124) mit dem Schaltelement (134) derart koppelbar sind, dass über den zweiten und dritten (122, 124) Radsatz wenigstens eine Windungsgangstufe (A, F) ausbildbar ist, **dadurch gekennzeichnet, dass** die zweite Eingangswelle als Hohlwelle ausgebildet ist.

2. Getriebeeinheit nach Anspruch 1, **dadurch gekennzeichnet, dass** das Schaltelement (134) zwischen einer ersten Schaltstellung, in der das Schaltrad (102) des zweiten Radsatzes (122) und das Schaltrad (104) des dritten Radsatzes (124) gekoppelt sind, und einer zweiten Schaltstellung beweglich ist, in der das Schaltrad (102) des zweiten Radsatzes (122) und das Schaltrad (104) des dritten Radsatzes (124) voneinander gelöst sind.

3. Getriebeeinheit nach Anspruch 1 oder 2, **dadurch gekennzeichnet, dass** mindestens ein erster Radsatz (320) das Schaltrad (310) an der ersten Eingangswelle (86) und das Festrad (330) an der Ausgangswelle (90) aufweist und/oder ein vierter Radsatz (420) das Schaltrad (410) an der zweiten Eingangswelle (88) und das Festrad (430) an der Ausgangswelle (90) aufweist.

4. Getriebeeinheit nach mindestens einem der vorangehenden Ansprüche, **dadurch gekennzeichnet, dass** die Getriebeeinheit (80) eines oder mehreren Koppelelemente (130 ,132, 300, 400) umfasst, wobei das Schaltrad (100, 102, 104, 106, 310, 410) mit einem Koppelelement (130 ,132, 300, 400) mit der ersten und/oder zweiten Eingangswelle (86, 88) und/oder der Ausgangswelle (90) drehfest und lösbar verbindbar ist.

5. Getriebeeinheit nach mindestens einem der vorangehenden Ansprüche, **dadurch gekennzeichnet, dass** das Koppelelement (130, 132, 300, 400) drehfest und axial verschiebbar auf der Ausgangswelle (90) gelagert ist und/oder mittels eines Stellelements bewegbar ist.

6. Getriebeeinheit nach mindestens einem der vorangehenden Ansprüche, **dadurch gekennzeichnet, dass** das Schaltelement (134) zwischen zwei Koppelelementen (130, 132) auf der Ausgangswelle (90) angeordnet ist, und/oder das Schaltelement (134) als eine einseitig wirkende Synchronisierung ausgebildet ist und/oder eine auf der Ausgangswelle (90) axial verschiebbare freidrehende Schiebemuffe und einen Synchronring umfasst, wobei der Synchronring axial auf einer Seite der Schiebemuffe angeordnet ist.

7. Getriebeeinheit nach mindestens einem der vorangehenden Ansprüche, **dadurch gekennzeichnet, dass** die höchste Gangstufe (F) und die niedrigste Gangstufe (A) als Windungsgangstufe realisiert sind und/oder die höchste Gangstufe (F) unter anderem den Radsatz der vorherigen Gangstufe (E) nutzt und/oder die niedrigste Gangstufe (A) unter anderem den Radsatz der nächst höheren Gangstufe (B) nutzt.

8. Getriebeeinheit nach mindestens einem der vorangehenden Ansprüche, **dadurch gekennzeichnet, dass** ein Hinterachskegeltrieb (94) mit der Ausgangswelle (90) verbunden ist und/oder die Ausgangswelle ist mit einer Verzahnung eines Vorderachsantriebs in Verbindung und/oder die Ausgangswelle (90) mit einem Parksperrenrad (96) in Verbindung steht.

9. Getriebeeinheit nach mindestens einem der vorangehenden Ansprüche, **dadurch gekennzeichnet, dass** das Ritzel des Hinterachskegeltriebs (94) als Teil der Ausgangswelle (90) ausgebildet ist.

10. Getriebeeinheit nach mindestens einem der vorangehenden Ansprüche, **dadurch gekennzeichnet, dass** in der erste und zweiten Eingangswelle eine Zapfwellen-Antriebswelle angeordnet ist.

11. Getriebeeinheit nach mindestens einem der vorangehenden Ansprüche, **dadurch gekennzeichnet, dass** die Getriebeeinheit (80) sechs Gangstufen (A, B, C, D, E, F) umfasst und/oder der erste und der sechste Gang (A, F) als Windungsgangstufe realisiert sind.

12. Getriebeanordnung für einen Antriebsstrang eines landwirtschaftlichen Zugfahrzeugs (10), um einen Antriebsmotor (22) mit einem Fahrantrieb (24) des Fahrzeugs zu verbinden, umfassend eine Getriebeeinheit (80) nach einem der Ansprüche 1 bis 11, und eine Getriebeeinrichtung (40).

13. Getriebeanordnung nach Anspruch 12, **dadurch gekennzeichnet, dass** die Getriebeeinrichtung (40) ein Stufengetriebe oder ein stufenloses Getriebe umfasst.

14. Getriebeanordnung nach mindestens einem der Ansprüche 12 oder 13, **dadurch gekennzeichnet, dass** das Mehrstufengetriebe in eine Mehrzahl von Lastschaltstufen schaltbar ist, und/oder das Mehrstufengetriebe einen Planetenradsatz (210) mit einer oder mehreren Planetenstufen (202) und eine den Planetenstufen (202) zugeordnete Kupplungsanordnung (204) umfasst, wobei das Mehrstufengetriebe vier Gänge umfasst.

15. Getriebeanordnung nach mindestens einem der Ansprüche 12 bis 14, **dadurch gekennzeichnet, dass** die Getriebeanordnung (30) eine Lastschaltwendeeinheit (220) zur Umkehr der Fahrtrichtung und/oder die Lastschaltwendeeinheit (220) der Getriebeeinrichtung (40) vorgelagert oder nachgelagert ist.

16. Landwirtschaftliches Zugfahrzeug mit einer Getriebeeinheit (80) nach einem der Ansprüche 1 bis 11 oder einer Getriebeanordnung (40) nach einem der Ansprüche 12 bis 15.

## Claims

1. Transmission unit for a drivetrain (20) of an agricultural towing vehicle, in particular for a tractor, comprising a first clutch (82) and a second clutch (84), the input side of which can be driven,
comprising a first input shaft (86) and a second input shaft (88) and an output shaft (90), and the first input shaft is in the form of a hollow shaft,
wherein the first clutch (82) is rotationally fixedly connected to the first input shaft (86) and the second clutch (84) is rotationally fixedly connected to the second input shaft (88),
and the transmission unit (80) has a plurality of gear sets (120, 122, 124, 126, 320, 420), each with a shift wheel (100, 102, 104, 106, 310, 410), and a fixed wheel (110, 112, 114, 116, 330, 430), for setting up gear ratio stages (B, C, D, E),
wherein at least one second gear set (102) in each case has the fixed wheel (112) on the first input shaft (86) and the shift wheel (102) on the output shaft (90), and at least one third gear set (104) has the fixed wheel (114) on the second input shaft (88) and in each case the shift wheel (104) on the output shaft (90),
and comprising a shift element (134) for coupling two shift wheels (102, 104),
wherein the shift wheel (102) of the second gear set (122) and the shift wheel (104) of the third gear set (124) can be coupled to the shift element (134) in such a way that at least one winding path gear ratio stage (A, F) can be formed via the second and the third gear set (122, 124), **characterized in that** the second input shaft is in the form of a hollow shaft.

2. Transmission unit according to Claim 1, **characterized in that** the shift element (134) is movable between a first shift position, in which the shift wheel (102) of the second gear set (122) and the shift wheel (104) of the third gear set (124) are coupled, and a second shift position, in which the shift wheel (102) of the second gear set (122) and the shift wheel (104) of the third gear set (124) are released from one another.

3. Transmission unit according to Claim 1 or 2, **characterized in that** at least one first gear set (320) has the shift wheel (310) on the first input shaft (86) and the fixed wheel (330) on the output shaft (90) and/or a fourth gear set (420) has the shift wheel (410) on the second input shaft (88) and the fixed wheel (430) on the output shaft (90).

4. Transmission unit according to at least one of the preceding claims, **characterized in that** the transmission unit (80) comprises one or more coupling elements (130, 132, 300, 400), wherein the shift wheel (100, 102, 104, 106, 310, 410) is rotationally fixedly and releasably connectable to the first and/or second input shaft (86, 88) and/or the output shaft (90) by means of a coupling element (130, 132, 300, 400).

5. Transmission unit according to at least one of the preceding claims, **characterized in that** the coupling element (130, 132, 300, 400) is rotationally fixedly and axially displaceably mounted on the output shaft (90) and/or is movable by means of an actuating element.

6. Transmission unit according to at least one of the preceding claims, **characterized in that** the shift element (134) is arranged between two coupling elements (130, 132) on the output shaft (90), and/or the shift element (134) is in the form of a synchronizer acting on one side and/or comprises a freely rotating sliding sleeve that is axially displaceable on the output shaft (90) and a synchronizing ring, the synchronizing ring being arranged axially on one side of the sliding sleeve.

7. Transmission unit according to at least one of the preceding claims, **characterized in that** the highest gear ratio stage (F) and the lowest gear ratio stage (A) are realized as winding path gear ratio stages, and/or the highest gear ratio stage (F) uses, inter alia, the gear set of the previous gear ratio stage (E) and/or the lowest gear ratio stage (A) uses, inter alia, the gear set of the next-higher gear ratio stage (B).

8. Transmission unit according to at least one of the preceding claims, **characterized in that** a rear-axle bevel gear drive (94) is connected to the output shaft (90) and/or the output shaft is connected to a toothset of a front-axle drive and/or the output shaft (90) is connected to a parking lock wheel (96).

9. Transmission unit according to at least one of the preceding claims, **characterized in that** the pinion of the rear-axle bevel gear drive (94) is in the form of part of the output shaft (90).

10. Transmission unit according to at least one of the preceding claims, **characterized in that** a power take-off drive shaft is arranged in the first and second input shaft.

11. Transmission unit according to at least one of the preceding claims, **characterized in that** the transmission unit (80) comprises six gear ratio stages (A, B, C, D, E, F) and/or the first and the sixth gear (A, F) are realized as winding path gear ratio stages.

12. Transmission arrangement for a drivetrain of an agricultural towing vehicle (10) in order to connect a traction motor (22) to a traction drive (24) of the vehicle, comprising a transmission unit (80) according to one of Claims 1 to 11, and a transmission device (40).

13. Transmission arrangement according to Claim 12, **characterized in that** the transmission device (40) comprises a range transmission or a continuously variable transmission.

14. Transmission arrangement according to at least either of Claims 12 and 13, **characterized in that** the multi-stage transmission can be shifted into a plurality of powershift ratio stages, and/or the multi-stage transmission comprises a planetary gear set (210) with one or more planetary stages (202) and a clutch arrangement (204) assigned to the planetary stages (202), wherein the multi-stage transmission comprises four gears.

15. Transmission arrangement according to at least one of Claims 12 to 14, **characterized in that** the transmission arrangement (30) comprises a powershift reversing unit (220) for reversing the direction of travel and/or the powershift reversing unit (220) is mounted upstream or downstream of the transmission device (40).

16. Agricultural towing vehicle having a transmission unit (80) according to one of Claims 1 to 11 or a transmission arrangement (40) according to one of Claims 12 to 15.

## Revendications

1. Unité de transmission pour une chaîne cinématique (20) d'un véhicule tracteur agricole, en particulier pour un tracteur,
avec un premier embrayage (82) et un deuxième embrayage (84), dont le côté entrée peut être entraîné,
avec un premier arbre d'entrée (86) et un deuxième arbre d'entrée (88) et un arbre de sortie (90), et le premier arbre d'entrée étant formé comme un arbre creux,
le premier embrayage (82) étant relié de manière solidaire en rotation au premier arbre d'entrée (86) et le deuxième embrayage (84) étant relié de manière solidaire en rotation du deuxième arbre d'entrée (88), et l'unité de transmission (80) comportant une multitude d'ensembles de pignons (120, 122, 124, 126, 320, 420) avec chacun un pignon baladeur (100, 102, 104, 106, 310, 410) et un pignon fixe (110, 112, 114, 116, 330, 430) pour établir des rapports de vitesse (B, C, d, E),
au moins un deuxième ensemble de pignons (102) comportant respectivement le pignon fixe (112) sur le premier arbre d'entrée (86) et respectivement le pignon baladeur (102) sur l'arbre de sortie (90), et au moins un troisième ensemble de pignons (104) comportant le pignon fixe (114) sur le deuxième arbre d'entrée (88) et respectivement le pignon baladeur (104) sur l'arbre de sortie (90),
et avec un élément de commutation (134) pour accoupler deux pignons baladeurs (102, 104),
le pignon baladeur (102) du deuxième ensemble de pignons (122) et le pignon baladeur (104) du troisième ensemble de pignons (124) pouvant être couplés à l'élément de commutation (134) de telle manière qu'au moins un rapport de vitesse d'enroulement (A, F) peut être formé par le deuxième et le troisième ensemble de pignons (122, 124), **caractérisée en ce que** le deuxième arbre d'entrée est formé comme un arbre creux.

2. Unité de transmission selon la revendication 1, **caractérisée en ce que** l'élément de commutation (134) est mobile entre une première position de commutation, dans laquelle le pignon baladeur (102) du deuxième ensemble de pignons (122) et le pignon baladeur (104) du troisième ensemble de pignons (124) sont couplés, et une deuxième position de commutation, dans laquelle le pignon baladeur (102) du deuxième ensemble de pignons (122) et le pignon baladeur (104) du troisième ensemble de pignons (124) sont détachés l'un de l'autre.

3. Unité de transmission selon la revendication 1 ou 2, **caractérisée en ce que** au moins un premier ensemble de pignons (320) comporte le pignon baladeur (310) sur le premier arbre d'entrée (86) et le pignon fixe (330) sur l'arbre de sortie (90), et/ou un quatrième ensemble de pignons (420) comporte le pignon baladeur (410) sur le deuxième arbre d'entrée (88) et le pignon fixe (430) sur l'arbre de sortie (90).

4. Unité de transmission selon au moins l'une des revendications précédentes, **caractérisée en ce que** l'unité de transmission (80) comprend un ou plusieurs éléments d'accouplement (130, 132, 300, 400), le pignon baladeur (100, 102, 104, 106, 310, 410) pouvant être relié de manière solidaire en rotation et de manière détachable à un premier élément d'accouplement (130,132, 300, 400) avec le premier /ou le deuxième arbre d'entrée (86, 88) et/ou l'arbre de sortie (90).

5. Unité de transmission selon au moins l'une des revendications précédentes, **caractérisée en ce que** l'élément d'accouplement (130, 132, 300, 400) est monté de manière solidaire en rotation et de manière à pouvoir être coulissé axialement sur l'arbre de sortie (90) et/ou peut être déplacé au moyen d'un élément de réglage.

6. Unité de transmission selon au moins l'une des revendications précédentes, **caractérisée en ce que** l'élément de commutation (134) est disposé entre deux éléments d'accouplement (130, 132) sur l'arbre de sortie (90) et/ou l'élément de commutation (134) est formé comme une synchronisation agissant unilatéralement et/ou comprend un manchon coulissant à rotation libre pouvant coulisser axialement sur l'arbre de sortie (90) et une bague de synchronisation, la bague de synchronisation étant disposée axialement sur un côté du manchon coulissant.

7. Unité de transmission selon au moins l'une des revendications précédentes, **caractérisée en ce que** le rapport de vitesse le plus élevé (F) et le rapport de vitesse le plus bas (A) sont réalisés comme rapport de vitesse d'enroulement et/ou le rapport de vitesse le plus élevé (F) utilise entre autres l'ensemble de pignons du rapport de vitesse (E) précédent et/ou le rapport de vitesse le plus bas (A) utilise entre autres l'ensemble de pignons du rapport de vitesse directement supérieur (B).

8. Unité de transmission selon au moins l'une des revendications précédentes, **caractérisée en ce qu'**un entraînement par pignon conique (94) d'essieu arrière est relié à l'arbre de sortie (90) et/ou l'arbre de sortie est relié à une denture d'un entraînement d'essieu avant et/ou l'arbre de sortie (90) est relié à une roue (96) de frein de stationnement.

9. Unité de transmission selon au moins l'une des revendications précédentes, **caractérisée en ce que** la roue dentée de l'entraînement par pignon conique (94) d'essieu arrière est réalisée comme partie de l'arbre de sortie (90).

10. Unité de transmission selon au moins l'une des revendications précédentes, **caractérisée en ce qu'**un arbre d'entraînement de prise de force est disposé dans le premier et le deuxième arbre d'entrée.

11. Unité de transmission selon au moins l'une des revendications précédentes, **caractérisée en ce que** l'unité de transmission (80) comprend six rapports de vitesse (A, B, C, D, E, F) et/ou le premier et le sixième rapport (A, F) sont réalisés comme un rapport de vitesse d'enroulement.

12. Ensemble de transmission pour une chaîne cinématique d'un véhicule tracteur agricole (10) pour relier un moteur d'entraînement (22) à un entraînement de traction (24) du véhicule, comprenant une unité de transmission (80) selon l'une des revendications 1 à 11, et un dispositif de transmission (40).

13. Ensemble de transmission selon la revendication 12, **caractérisé en ce que** le dispositif de transmission (40) comprend une transmission étagée ou une transmission à variation continue.

14. Ensemble de transmission selon au moins l'une des revendications 12 ou 13, **caractérisé en ce que** la transmission à plusieurs étages peut être commutée en une multitude d'étages de commutation de charge et/ou la transmission à plusieurs étages comprend un train planétaire (210) avec un ou plusieurs étages planétaires (202) et un ensemble d'embrayage (204) associé aux étages planétaires (202), la transmission à plusieurs étages comprenant quatre rapports.

15. Ensemble de transmission selon au moins l'une des revendications 12 à 14, **caractérisé en ce que** l'ensemble de transmission (30) est monté en amont ou en aval d'une unité d'inversion à commutation sous charge (220) pour inverser le sens de marche et/ou de l'unité d'inversion à commutation sous charge (220) du dispositif de transmission (40).

16. Véhicule tracteur agricole avec une unité de transmission (80) selon l'une des revendications 1 à 11 ou un ensemble de transmission (40) selon l'une des revendications 12 à 15.
